(19) Europäisches Patentamt / European Patent Office / Office européen des brevets

(11) **EP 4 169 199 B1**

(12) **EUROPEAN PATENT SPECIFICATION**

(45) Date of publication and mention
of the grant of the patent:
**06.08.2025 Bulletin 2025/32**

(21) Application number: **21736703.6**

(22) Date of filing: **19.06.2021**

(51) International Patent Classification (IPC):
**H04L 5/00** *(2006.01)*

(52) Cooperative Patent Classification (CPC):
**H04L 5/0053; H04L 5/0007; H04L 5/001**

(86) International application number:
**PCT/IB2021/055417**

(87) International publication number:
**WO 2021/255712 (23.12.2021 Gazette 2021/51)**

(54) **POWER EFFICIENT PDCCH MONITORING**

LEISTUNGSEFFIZIENTE PDCCH-ÜBERWACHUNG

SURVEILLANCE DE CANAUX PDCCH À FAIBLE CONSOMMATION D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2020   US 202063041755 P**

(43) Date of publication of application:
**26.04.2023 Bulletin 2023/17**

(73) Proprietor: **Lenovo (Singapore) Pte. Ltd.
New Tech Park 556741 (SG)**

(72) Inventors:
• **JUNG, Hyejung
Northbrook, Illinois 60062 (US)**
• **NANGIA, Vijay
Woodridge, Illinois 60517 (US)**
• **KUCHIBHOTLA, Ravi
Chicago, Illinois 60680 (US)**
• **BEN HADJ FREDJ, Abir
60318 Frankfurt am Main (DE)**

(74) Representative: **Openshaw & Co.
8 Castle Street
Farnham, Surrey GU9 7HR (GB)**

(56) References cited:
**WO-A1-2020/055212     US-A1- 2020 169 991**

• **SAMSUNG: "On UE adaptation Schemes", vol.
RAN WG1, no. Athens, Greece; 20190325 -
20190301, 15 February 2019 (2019-02-15),
XP051600012, Retrieved from the Internet
<URL:http://www.3gpp.org/ftp/tsg%5Fran/WG1%
5FRL1/TSGR1%5F96/Docs/R1%2D1902318%
2Ezip> [retrieved on 20190215]**

**Description**

CROSS-REFERENCE TO RELATED APPLICATIONS

This application claims priority to United States Provisional Patent Application Number 63/041,755 entitled "POWER EFFICIENT PDCCH MONITORING" and filed on June 19, 2020, for Hyejung Jung, et al.,

FIELD

The subject matter disclosed herein relates generally to wireless communications and more particularly relates to power efficient physical downlink control channel ("PDCCH") monitoring.

BACKGROUND

In certain wireless communication systems, a User Equipment device ("UE") is able to connect with a fifth-generation ("5G") core network (i.e., "5GC") in a Public Land Mobile Network ("PLMN"). In wireless networks, reduced capability UEs may need to be operated with a battery that lasts from multiple days to multiple years.

WO 2020/055212 A1 relates to UE operation with reduced power consumption. US 2020/169991 A1 relates to a method and apparatus for PDCCH monitoring. The reader is also referred to SAMSUNG: "On UE adaptation Schemes", 3GPP DRAFT; R1-1902318.

BRIEF SUMMARY

Disclosed are procedures for power efficient PDCCH monitoring. Said procedures are implemented by the user equipment, network device and corresponding methods provided by the appended set of independent claims. Further embodiments are defined by the dependent claims. The invention is defined and limited by the appended set of independent claims.

BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:

> Figure 1 is a schematic block diagram illustrating one embodiment of a wireless communication system for power efficient PDCCH monitoring;
> Figure 2 is a diagram illustrating one embodiment of skipping of DCI monitoring based on PDSCH scheduling information and the minimum applicable K0 ($K_{0,\ min}$) for the active DL BWP;
> Figure 3 is a diagram illustrating one embodiment of skipping of DCI monitoring based on PUSCH scheduling information and the minimum applicable K2 ($K_{2,\ min}$) for the active UL BWP;
> Figure 4 is a diagram illustrating one embodiment of skipping of DCI monitoring based on PDSCH scheduling information and the minimum applicable K0 ($K_{0,\ min}$) for the active DL BWP, where $K_{0,\ min}$ changes from $K_{0,\ min}=0$ to $K_{0,\ min} = 1$;
> Figure 5 is a block diagram illustrating one embodiment of a user equipment apparatus that may be used for power efficient PDCCH monitoring;
> Figure 6 is a block diagram illustrating one embodiment of a network apparatus that may be used for power efficient PDCCH monitoring;
> Figure 7 is a flowchart diagram illustrating one embodiment of a method for power efficient PDCCH monitoring; and
> Figure 8 is a flowchart diagram illustrating one embodiment of a method for power efficient PDCCH monitoring.

DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for power efficient PDCCH monitoring. In certain embodiments, the methods may be performed using computer code embedded on a computer-readable medium. In various embodiments, an apparatus or system may include a computer-readable medium containing computer-readable code which, when executed by a processor, causes the apparatus or system to perform at least a portion of the below described solutions.

Reduced capability UEs, such as industrial wireless sensors, video surveillance devices, and wearable devices, e.g., smart watches, may need to be operated with a battery that lasts for multiple days to a few years. Even for enhanced mobile broadband ("eMBB") and/or ultra-reliable and low-latency communications ("URLLC") UEs, reducing UE power consumption is critical to provide better 5G experiences to end users and to enable new use cases.

The subject matter disclosed herein presents solutions to allow for power-efficient PDDCH monitoring that is able to flexibly accommodate various traffics/applications with different latency requirements.

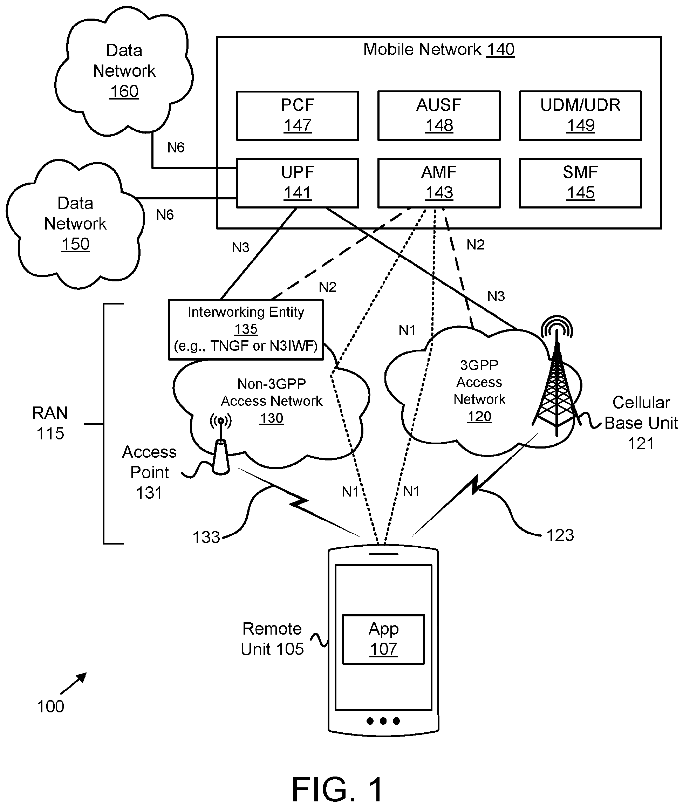

Figure 1 depicts a wireless communication system 100 for power efficient PDCCH monitoring, according to embodiments of the disclosure. In one embodiment, the wireless communication system 100 includes at least one remote unit 105, a Fifth-Generation Radio Access Network ("5G-RAN") 115, and a mobile core network 140. The 5G-RAN 115 and the mobile core network 140 form a mobile communication network. The 5G-RAN 115 may be composed of a 3GPP access network 120 containing at least one cellular base unit 121 and/or a non-3GPP access network 130 containing at least one access point 131. The remote unit 105 communicates with the 3GPP access network 120 using 3GPP communication links 123 and/or communicates with the non-3GPP access network 130 using non-3GPP communication links 133. Even though a specific number of remote units 105, 3GPP access networks 120, cellular base units 121, 3GPP communication links 123, non-3GPP access networks 130, access points 131, non-3GPP communication links 133, and mobile core networks 140 are depicted in Figure 1, one of skill in the art will recognize that any number of remote units 105, 3GPP access networks 120, cellular base units 121, 3GPP communication links 123, non-3GPP access networks 130, access points 131, non-3GPP communication links 133, and mobile core networks 140 may be included in the wireless communication system 100.

In one implementation, the RAN 120 is compliant with the 5G system specified in the Third Generation Partnership Project ("3GPP") specifications. For example, the RAN 120 may be a NG-RAN, implementing NR RAT and/or LTE RAT. In another example, the RAN 120 may include non-3GPP RAT (e.g., Wi-Fi® or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as UEs, subscriber units, mobiles, mobile stations, users, terminals, mobile terminals, fixed terminals, subscriber stations, user terminals, wireless transmit/receive unit ("WTRU"), a device, or by other terminology used in the art.

The remote units 105 may communicate directly with one or more of the cellular base units 121 in the 3GPP access network 120 via uplink ("UL") and downlink ("DL") communication signals. Furthermore, the UL and DL communication signals may be carried over the 3GPP communication links 123. Similarly, the remote units 105 may communicate with one or more access points 131 in the non-3GPP access network(s) 130 via UL and DL communication signals carried over the non-3GPP communication links 133. Here, the access networks 120 and 130 are intermediate networks that provide the remote units 105 with access to the mobile core network 140.

In some embodiments, the remote units 105 communicate with a remote host (e.g., in the data network 150 or in the data network 160) via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the 5G-RAN 115 (i.e., via the 3GPP access network 120 and/or non-3GPP network 130). The mobile core network 140 then relays traffic between the remote unit 105 and the remote host using the PDU session. The PDU session represents a logical connection between the remote unit 105 and a User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. Additionally - or alternatively - the remote unit 105 may have at least one PDU session for communicating with the packet data network 160. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 131. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 130. In certain embodiments, there is a one-to-one mapping between an EPS Bearer and a QoS profile, such that all packets belonging to a specific EPS Bearer have the same QoS Class Identifier ("QCI").

As described in greater detail below, the remote unit 105 may use a first data connection (e.g., PDU Session) established with the first mobile core network 130 to establish a second data connection (e.g., part of a second PDU session) with the second mobile core network 140. When establishing a data connection (e.g., PDU session) with the second mobile core network 140, the remote unit 105 uses the first data connection to register with the second mobile core network 140.

The cellular base units 121 may be distributed over a geographic region. In certain embodiments, a cellular base unit 121 may also be referred to as an access terminal, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a Home Node-B, a relay node, a device, or by any other terminology used in the art. The cellular base units 121 are generally part of a radio access network ("RAN"), such as the 3GPP access network 120, that may include one or more controllers communicably coupled to one or more corresponding cellular base units 121. These and other elements of radio access network are not illustrated but are well known generally by those having ordinary skill in the art. The cellular base units 121 connect to the mobile core network 140 via the 3GPP access network 120.

The cellular base units 121 may serve a number of remote units 105 within a serving area, for example, a cell or a cell sector, via a 3GPP wireless communication link 123. The cellular base units 121 may communicate directly with one or more of the remote units 105 via communication signals. Generally, the cellular base units 121 transmit DL communication signals to serve the remote units 105 in the time, frequency, and/or spatial domain. Furthermore, the DL communication signals may be carried over the 3GPP communication links 123. The 3GPP communication links 123 may be any suitable carrier in licensed or unlicensed radio spectrum. The 3GPP communication links 123 facilitate communication between one or more of the remote units 105 and/or one or more of the cellular base units 121. Note that during NR operation on unlicensed spectrum (referred to as "NR-U"), the base unit 121 and the remote unit 105 communicate over unlicensed (i.e., shared) radio spectrum.

The non-3GPP access networks 130 may be distributed over a geographic region. Each non-3GPP access network 130 may serve a number of remote units 105 with a serving area. An access point 131 in a non-3GPP access network 130 may communicate directly with one or more remote units 105 by receiving UL communication signals and transmitting DL communication signals to serve the remote units 105 in the time, frequency, and/or spatial domain. Both DL and UL communication signals are carried over the non-3GPP communication links 133. The 3GPP communication links 123 and non-3GPP communication links 133 may employ different frequencies and/or different communication protocols. In various embodiments, an access point 131 may communicate using unlicensed radio spectrum. The mobile core network 140 may provide services to a remote unit 105 via the non-3GPP access networks 130, as described in greater detail herein.

In some embodiments, a non-3GPP access network 130 connects to the mobile core network 140 via an interworking entity 135. The interworking entity 135 provides an interworking between the non-3GPP access network 130 and the mobile core network 140. The interworking entity 135 supports connectivity via the "N2" and "N3" interfaces. As depicted, both the 3GPP access network 120 and the interworking entity 135 communicate with the AMF 143 using a "N2" interface. The 3GPP access network 120 and interworking entity 135 also communicate with the UPF 141 using a "N3" interface. While depicted as outside the mobile core network 140, in other embodiments the interworking entity 135 may be a part of the core network. While depicted as outside the non-3GPP RAN 130, in other embodiments the interworking entity 135 may be a part of the non-3GPP RAN 130.

In certain embodiments, a non-3GPP access network 130 may be controlled by an operator of the mobile core network 140 and may have direct access to the mobile core network 140. Such a non-3GPP AN deployment is referred to as a "trusted non-3GPP access network." A non-3GPP access network 130 is considered as "trusted" when it is operated by the 3GPP operator, or a trusted partner, and supports certain security features, such as strong air-interface encryption. In contrast, a non-3GPP AN deployment that is not controlled by an operator (or trusted partner) of the mobile core network 140, does not have direct access to the mobile core network 140, or does not support the certain security features is referred to as a "non-trusted" non-3GPP access network. An interworking entity 135 deployed in a trusted non-3GPP access network 130 may be referred to herein as a Trusted Network Gateway Function ("TNGF"). An interworking entity 135 deployed in a non-trusted non-3GPP access network 130 may be referred to herein as a non-3GPP interworking function ("N3IWF"). While depicted as a part of the non-3GPP access network 130, in some embodiments the N3IWF may be a part of the mobile core network 140 or may be located in the data network 150.

In one embodiment, the mobile core network 140 is a 5G core ("5GC") or the evolved packet core ("EPC"), which may be coupled to a data network 150, like the Internet and private data networks, among other data networks. A remote unit 105 may have a subscription or other account with the mobile core network 140. Each mobile core network 140 belongs to a single public land mobile network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF ("UPF") 141. The mobile core network 140 also includes multiple control plane functions including, but not limited to, an Access and Mobility Management Function ("AMF") 143 that serves the 5G-RAN 115, a Session Management Function ("SMF") 145, a Policy Control Function ("PCF") 146, an Authentication Server Function ("AUSF") 147, a Unified Data Management ("UDM") and Unified Data Repository function ("UDR").

The UPF(s) 141 is responsible for packet routing and forwarding, packet inspection, QoS handling, and external PDU session for interconnecting Data Network ("DN"), in the 5G architecture. The AMF 143 is responsible for termination ofNAS signaling, NAS ciphering & integrity protection, registration management, connection management, mobility management, access authentication and authorization, security context management. The SMF 145 is responsible for session management (i.e., session establishment, modification, release), remote unit (i.e., UE) IP address allocation & management, DL data notification, and traffic steering configuration for UPF for proper traffic routing.

The PCF 146 is responsible for unified policy framework, providing policy rules to CP functions, access subscription information for policy decisions in UDR. The AUSF 147 acts as an authentication server.

The UDM is responsible for generation of Authentication and Key Agreement ("AKA") credentials, user identification handling, access authorization, subscription management. The UDR is a repository of subscriber information and can be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 149.

In various embodiments, the mobile core network 140 may also include an Network Exposure Function ("NEF") (which is responsible for making network data and resources easily accessible to customers and network partners, e.g., via one or more APIs), a Network Repository Function ("NRF") (which provides NF service registration and discovery, enabling NFs to identify appropriate services in one another and communicate with each other over Application Programming Interfaces ("APIs")), or other NFs defined for the 5GC. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. A network instance may be identified by a S-NSSAI, while a set of network slices for which the remote unit 105 is authorized to use is identified by NSSAI. In certain embodiments, the various network slices may include separate instances of network functions, such as the SMF and UPF 141. In some embodiments, the different network slices may share some common network functions, such as the AMF 143. The different network slices are not shown in Figure 1 for ease of illustration, but their support is assumed.

Although specific numbers and types of network functions are depicted in Figure 1, one of skill in the art will recognize that any number and type of network functions may be included in the mobile core network 140. Moreover, where the mobile core network 140 comprises an EPC, the depicted network functions may be replaced with appropriate EPC entities, such as an MME, S-GW, P-GW, HSS, and the like.

While Figure 1 depicts components of a 5G RAN and a 5G core network, the described embodiments for using a pseudonym for access authentication over non-3GPP access apply to other types of communication networks and RATs, including IEEE 802.11 variants, GSM, GPRS, UMTS, LTE variants, CDMA 2000, Bluetooth, ZigBee, Sigfoxx, and the like. For example, in an 4G/LTE variant involving an EPC, the AMF 143 may be mapped to an MME, the SMF mapped to a control plane portion of a PGW and/or to an MME, the UPF 141 may be mapped to an SGW and a user plane portion of the PGW, the UDM/UDR 149 may be mapped to an HSS, etc.

As depicted, a remote unit 105 (e.g., a UE) may connect to the mobile core network (e.g., to a 5G mobile communication network) via two types of accesses: (1) via 3GPP access network 120 and (2) via a non-3GPP access network 130. The first type of access (e.g., 3GPP access network 120) uses a 3GPP-defined type of wireless communication (e.g., NG-RAN) and the second type of access (e.g., non-3GPP access network 130) uses a non-3GPP-defined type of wireless communication (e.g., WLAN). The 5G-RAN 115 refers to any type of 5G access network that can provide access to the mobile core network 140, including the 3GPP access network 120 and the non-3GPP access network 130.

To solve the problem of battery life in reduced capability UEs, described above, the present disclosure proposes solutions that allows for power-efficient PDDCH monitoring and yet to flexibly accommodate various traffics/applications with different latency requirements. Beneficially, in one embodiment, the disclosed solution extends the battery life of batteries in reduced capability UEs such as industrial wireless sensors, video surveillance devices, and wearables.

In Rel-16 NR, several UE power saving mechanisms based on reduced PDCCH monitoring are specified. In one example, a UE can receive a secondary cell ("SCell") dormancy indication in downlink control information ("DCI") formats 0_1/1_1 scheduling a physical uplink shared channel ("PUSCH")/physical downlink shared channel ("PDSCH") and start not to perform PDCCH monitoring on the indicated SCell group(s). Further, the UE can be configured with a higher layer parameter *minimumSchedulingOffset* in an uplink ("UL") bandwidth part ("BWP") and/or a downlink ("DL") BWP, which restricts the minimum scheduling offset and accordingly, allows the UE to avoid unnecessary buffering of DL streams and/or to turn off (or operate in a low power mode) some of transmitting ("Tx")/receiving ("Rx") components for a short period.

In another example, a UE can receive an indication of search space switching between two groups of configured search spaces via group-common PDCCH, e.g., DCI format 2_0. Alternatively, the UE can switch from monitoring search space sets with group index 0 to monitoring search space sets with group index 1 upon detecting a DCI format by monitoring PDCCH according to a search space set with group index 0. Further, the UE can switch back to the search space sets with group index 0 upon expiry of a search space switching timer where the search space switching timer is initially set to a value of the parameter *searchSpaceSwitchingTimer-r16*.

Regarding format 0_1, DCI format 0_1 is used for the scheduling of one or multiple PUSCH in one cell or indicating configured grant ("CG") downlink feedback information ("CG-DFI") to a UE.

For a minimum applicable scheduling offset indicator - 0 or 1 bit:

• 0 bit if higher layer parameter *minimumSchedulingOffset* is not configured;

• 1 bit if higher layer parameter *minimumSchedulingOffset* is configured. The 1 bit indication is used to determine the minimum applicable K0 for the active DL BWP and the minimum applicable K2 value for the active UL BWP according to Table 7.3.1.1.2-33. If the minimum applicable K0 is indicated, the minimum applicable value of the aperiodic CSI-RS triggering offset for an active DL BWP shall be the same as the minimum applicable K0 value.

Table 1: Joint indication of minimum applicable scheduling offset K0/K2

| Bit field mapped to index | Minimum applicable K0 for the active DL BWP, if *minimumSchedulingOffset* is configured for the DL BWP | Minimum applicable K2 for the active UL BWP, if *minimumSchedulingOffset* is configured for the UL BWP |
|---|---|---|
| 0 | The first value configured by *minimumSchedulingOffset* for the active DL BWP | The first value configured by *minimumSchedulingOffset* for the active UL BWP |
| 1 | The second value configured by *minimumSchedulingOffset* for the active DL BWP if the second value is configured; 0 otherwise | The second value configured by *minimumSchedulingOffset* for the active UL BWP if the second value is configured; 0 otherwise |

Regarding format 1_1, DCI format 1_1 is used for the scheduling of PDSCH in one cell.

For a minimum applicable scheduling offset indicator - 0 or 1 bit:

• 0 bit if higher layer parameter *minimumSchedulingOffset* is not configured;

• 1 bit if higher layer parameter *minimumSchedulingOffset* is configured. The 1 bit indication is used to determine the minimum applicable K0 for the active DL BWP and the minimum applicable K2 value for the active UL BWP according to Table 7.3.1.1.2-33. If the minimum applicable K0 is indicated, the minimum applicable value of the aperiodic CSI-RS triggering offset for an active DL BWP shall be the same as the minimum applicable K0 value.

Regarding resource allocation in time domain, when the UE is configured with *[minimumSchedulingOffset]* in an active DL BWP it applies a minimum scheduling offset restriction indicated by the ['Minimum applicable scheduling offset indicator'] field in DCI format 0_1 or 1_1. When the UE configured with *[minimumSchedulingOffset]* in active DL BWP and it has not received ['Minimum applicable scheduling offset indicator'] field in DCI format 0_1 or 1_1, UE shall apply a minimum scheduling offset restriction indicated based on ['*Minimum applicable scheduling offset indicator*'] value '0'. When the *minimum scheduling offset restriction* is applied the UE is not expected to be scheduled with a DCI in slot *n* to receive a PDSCH scheduled with cell radio network temporary identifier ("C-RNTI"), configured scheduling ("CS")-RNTI or modulation and coding scheme ("MCS")-C-RNTI with $K_0$ smaller than the applicable minimum scheduling offset restriction $K_{0min}$. The minimum scheduling offset restriction is not applied when PDSCH transmission is scheduled with C-RNTI, CS-RNTI or MCS-C-RNTI in common search space associated with control resource set ("CORESET")0 and default PDSCH time domain resource allocation is used or when PDSCH transmission is scheduled with system information ("SI")-RNTI or random access ("RA")-RNTI.

Regarding resource allocation in time domain, if *pusch-TimeDomainAllocationList* in *pusch-Config* contains row indicating resource allocation for two to eight contiguous PUSCHs, $K_2$ indicates the slot where UE shall transmit the first PUSCH of the multiple PUSCHs. Each PUSCH has a separate start and length indicator value ("SLIV") and mapping type. The number of scheduled PUSCHs is signaled by the number of indicated valid SLIVs in the row of the *pusch-TimeDomainAllocationList* signaled in DCI format 0_1.

When the UE is configured with *[minimumSchedulingOffset]* in active UL BWP it applies a minimum scheduling offset restriction indicated by the ['Minimum applicable scheduling offset indicator'] field in DCI format 0_1 or 1_1. When the UE configured with *[minimumSchedulingOffset]* in active UL BWP and it has not received ['Minimum applicable scheduling offset indicator'] field in DCI format 0_1 or 1_1, the UE shall apply a minimum scheduling offset restriction indicated based on ['Minimum applicable scheduling offset indicator'] value '0'. When the *minimum scheduling offset restriction* is applied the UE is not expected to be scheduled with a DCI in slot *n* to transmit a PUSCH scheduled with C-RNTI, CS-RNTI or MCS-C-RNTI with $K_2$ smaller than the applicable minimum scheduling offset restriction $K_{2min}$ in slot *n.* The minimum scheduling restriction is not applied when PUSCH transmission is scheduled by random access response ("RAR") UL grant for random access channel ("RACH") procedure, or when PUSCH is scheduled with temporary cell ("TC")-RNTI.

Regarding application delay of the minimum scheduling offset restriction, when the UE is scheduled with DCI format 0_1 or 1_1 with a ['Minimum applicable scheduling offset indicator'] field, it shall determine the $K_{0min}$ and $K_{2min}$ values to be applied, while the previously applied $K_{0min}$ and $K_{2min}$ values are applied until the new values take effect after application delay. Change of applied minimum scheduling offset restriction indication carried by DCI in slot *n,* shall be applied in slot *n+X* of the scheduling cell. The UE does not expect to be scheduled with DCI format 0_1 or 1_1 with ['Minimum applicable scheduling offset indicator'] field indicating another change to the applied *K0min* or *K2min* for the same active BWP before slot *n+X* of the scheduling cell.

When the DCI format 0_1 or 1_1 with ['Minimum applicable scheduling offset indicator'] field indicating a change to the applied $K_{0min}$ or $K_{2min}$ is contained within the first three symbols of the slot, the value of application delay *X* is determined by,

$$X = max\left(\left\lceil K_{0minOld} \cdot \right.\right.$$

where $K_{0minOld}$ is the currently applied $K_{0min}$ value of the active DL BWP in the scheduled cell, and $Z_\mu$ is determined by the subcarrier spacing of the active DL BWP in the scheduling cell, and given in Table 2 and $\mu_{PDCCH}$ and $\mu_{PDSCH}$ are the sub-carrier spacing configurations for PDCCH and PDSCH, respectively

When the DCI format 0_1 or 1_1 with ['Minimum applicable scheduling offset indicator'] field is received outside the first [three] symbols of the slot, value of $Z_\mu$ from Table 5.3.1-1 is incremented by one before determining the application delay *X*.

Table 2: Definition of $Z_\mu$

| $\mu$ | $Z_\mu$ |
|---|---|
| 0 | 1 |
| 1 | 1 |
| 2 | 2 |
| 3 | 2 |

Regarding UE procedure for receiving control information, a UE monitors a set of PDCCH candidates in one or more CORESETs on the active DL BWP on each activated serving cell configured with PDCCH monitoring according to corresponding search space sets where monitoring implies decoding each PDCCH candidate according to the monitored DCI formats.

If a UE is provided *PDCCHMonitoringCapabilityConfig* for a serving cell, the UE obtains an indication to monitor PDCCH on the serving cell for a maximum number of PDCCH candidates and non-overlapping CCEs.

- per slot, if *PDCCHMornitoringCapabilityConfig* = R15 PDCCH monitoring capability, or
- per span, if *PDCCHMornitoringCapabilityConfig* = R16 PDCCH monitoring capability

If the UE is not provided *PDCCHMonitoringCapabilityConfig,* the UE monitors PDCCH on the serving cell per slot.

A UE reports one or more combinations of (X,Y) number of symbols, where X$\geq$Y, for PDCCH monitoring. A span is a set of consecutive symbols in a slot in which the UE is configured to monitor PDCCH candidates. The UE supports PDCCH monitoring occasions in any symbol of a slot with minimum time separation of X symbols between the first symbol of two consecutive spans, including across slots. The duration of a span is $d_{span}$ = $max(d_{CORESET,max}$, $Y_{min})$, where $d_{CORESET,max}$ is a maximum duration among durations of CORESETs that are configured to the UE and $Y_{min}$ is a minimum value of Y in the combinations of (X, Y) that are reported by the UE. A last span in a slot can have a shorter duration than other spans in the slot.

A UE capability for PDCCH monitoring per slot or per span on an active DL BWP of a serving cell is defined by a maximum number of PDCCH candidates and non-overlapped control channel elements ("CCEs") the UE can monitor per slot or per span, respectively, on the active DL BWP of the serving cell.

For monitoring of a PDCCH candidate by a UE in a slot or in a span, if the UE

- has received *ssb-PositionsInBurst* in SIB1 and has not received *ssb-PositionsInBurst* in *ServingCellConfigCommon* for a serving cell, and
- does not monitor PDCCH candidates in a Type0-PDCCH CSS set, and
- at least one RE for a PDCCH candidate overlaps with at least one RE of a candidate SS/PBCH block corresponding to a SS/PBCH block index provided by *ssb-PositionsInBurst* in *SIB1,*

the UE is not required to monitor the PDCCH candidate.

For monitoring of a PDCCH candidate by a UE in a slot, if the UE

- has received *ssb-PositionsInBurst* in *ServingCellConfigCommon* for a serving cell, and
- does not monitor PDCCH candidates in a Type0-PDCCH CSS set, and
- at least one RE for a PDCCH candidate overlaps with at least one RE of a candidate SS/PBCH block corresponding to a SS/PBCH block index provided by *ssb-PositionsInBurst* in *ServingCellConfigCommon,*

the UE is not required to monitor the PDCCH candidate.

If a UE monitors the PDCCH candidate for a Type0-PDCCH CSS set on the serving cell, the UE may assume that no SS/PBCH block is transmitted in REs used for monitoring the PDCCH candidate on the serving cell.

If at least one RE of a PDCCH candidate for a UE on the serving cell overlaps with at least one RE of *lte-CRS-ToMatchAround,* or of *LTE-CRS-PatternList-r16,* the UE is not required to monitor the PDCCH candidate.

If a UE is provided *availableRB-SetPerCell-r16,* the UE is not required to monitor PDCCH candidates that overlap with any resource block ("RB") from RB sets that are indicated as unavailable for receptions by DCI format 2_0.

If a UE can support

- a first set of $N_{\text{cells},0}^{\text{DL}}$ serving cells where the UE is either not provided *CORESETPoolIndex* or is provided *CORESETPoolIndex* with a single value for all CORESETs on all DL BWPs of each serving cell from the first set of serving cells, and

- a second set of $N_{\text{cells},1}^{\text{DL}}$ serving cells where the UE is provided *CORESETPoolIndex* with a value 0 for a first CORESET and with a value 1 for a second CORESET on any DL BWP of each serving cell from the second set of serving cells,

the UE determines, for the purpose of reporting *pdcch-BlindDetectionCA,* a number of serving cells as $N_{\text{cells},0}^{\text{DL}} + R \cdot N_{\text{cells},1}^{\text{DL}}$ where R is either a value reported by the UE or R = *TBD* if the UE does not report a value of R.

If a UE indicates in *UE-NR-Capability* a carrier aggregation capability larger than 4 serving cells and the UE is not provided *PDCCHMonitoringCapabilityConfig* for any downlink cell or if the UE is provided *PDCCHMonitoringCapabilityConfig = R15 PDCCH monitoring capability* for all downlink cells where the UE monitors PDCCH, the UE includes in *UE-NR-Capability* an indication for a maximum number of PDCCH candidates and for a maximum number of non-overlapped CCEs the UE can monitor per slot when the UE is configured for carrier aggregation operation over more than 4 cells. When a UE is not configured for new radio-dual connectivity ("NR-DC") operation, the UE determines a capability to monitor a maximum number of PDCCH candidates and a maximum number of non-overlapped CCEs per slot that corresponds to $N_{\text{cells}}^{\text{cap}}$ downlink cells, where

- $N_{\text{cells}}^{\text{cap}}$ is $N_{\text{cells},0}^{\text{DL}} + R \cdot N_{\text{cells},1}^{\text{DL}}$ if the UE does not provide *pdcch-BlindDetectionCA* where $N_{\text{cells},0}^{\text{DL}} + N_{\text{cells},1}^{\text{DL}}$ is the number of configured downlink serving cells

- otherwise, $N_{\text{cells}}^{\text{cap}}$ is the value of *pdcch-BlindDetectionCA*

When a UE is configured for NR-DC operation, the UE determines a capability to monitor a maximum number of PDCCH candidates and a maximum number of non-overlapped CCEs per slot that corresponds to $N_{\text{cells}}^{\text{cap}} = N_{\text{cells}}^{\text{MCG}}$ downlink cells for the MCG where $N_{\text{cells}}^{\text{MCG}}$ is provided by *pdcch-BlindDetection* for the MCG and determines a capability to monitor a maximum number of PDCCH candidates and a maximum number of non-overlapped CCEs per slot that corresponds to $N_{\text{cells}}^{\text{cap}} = N_{\text{cells}}^{\text{SCC}}$ downlink cells for the SCG where $N_{\text{cells}}^{\text{SCC}}$ is provided by *pdcch-BlindDetection* for the SCG. When the UE is configured for carrier aggregation operation over more than 4 cells, or for a cell group when the UE is configured for NR-DC operation, the UE does not expect to monitor per slot a number of PDCCH candidates or a number of non-overlapped CCEs that is larger than the maximum number as derived from the corresponding value of $N_{\text{cells}}^{\text{cap}}$ .

When a UE is configured for NR-DC operation with a total of $N_{\text{NR-DC}}^{\text{DL,cells}}$ downlink cells on both the MCG and the SCG, the UE expects to be provided *pdcch-BlindDetection* for the MCG and *pdcch-BlindDetection* for the SCG with values that satisfy

- *pdcch-BlindDetection* for the MCG + *pdcch-BlindDetection* for the SCG <= *pdcch-BlindDetectionCA,* if the UE reports *pdcch-BlindDetectionCA,* or

- *pdcch-BlindDetection* for the MCG + *pdcch-BlindDetection* for the SCG <= $N_{\text{NR-DC}}^{\text{DL,cells}}$ , if the UE does not report *pdcch-BlindDetectionCA.*

For NR-DC operation, the UE may indicate, through *pdcch-BlindDetectionMCG-UE* and *pdcch-BlindDetectionSCG-UE,* respective maximum values for *pdcch-BlindDetection* for the MCG and *pdcch-BlindDetection* for the SCG.

If the UE reports *pdcch-BlindDetectionCA,*

- the value range of *pdcch-BlindDetectionMCG-UE* or of *pdcch-BlindDetectionSCG-UE* is [1, *..., pdcch-BlindDetectionCA*-1], and
- *pdcch-BlindDetectionMCG-UE + pdcch-BlindDetectionSCG-UE >= pdcch-BlindDetectionCA.*

Otherwise, if $N_{\text{NR-DC,max}}^{\text{DL,cells}}$ is a maximum total number of downlink cells that the UE can be configured on both the master cell group ("MCG") and the secondary cell group ("SCG"),

- the value range of *pdcch-BlindDetectionMCG-UE* or of *pdcch-BlindDetectionSCG-UE* is [1, 2, 3],

- $pdcch\text{-}BlindDetectionMCG\text{-}UE + pdcch\text{-}BlindDetectionSCG\text{-}UE >= N_{\text{NR-DC,max}}^{\text{DL,cells}}$ .

If a UE indicates in *UE-NR-Capability-r16* a carrier aggregation capability larger than X downlink cells, the UE includes in *UE-NR-Capability-r16* an indication for a maximum number of PDCCH candidates and a maximum number of non-overlapped CCEs that the UE can monitor per span when the UE is configured for carrier aggregation operation over more than X downlink cells. When a UE is not configured for NR-DC operation and the UE is provided *PDCCHMonitoringCapabilityConfig = R16 PDCCH monitoring capability* for all downlink cell where the UE monitors PDCCH, the UE determines a capability to monitor a maximum number of PDCCH candidates and a maximum number of non-overlapped CCEs per span that corresponds to $N_{cells}^{cap-r16}$ downlink cells, where

- $N_{cells}^{cap-r16}$ is the number of configured downlink cells if the UE does not provide *pdcch-BlindDetectionCA-r16*

- otherwise, $N_{cells}^{cap-r16}$ is the value of *pdcch-BlindDetectionCA-r16*

If a UE indicates in *UE-NR-Capability-r15* or in *UE-NR-Capability-r16* a carrier aggregation capability larger than Y downlink cells or larger than Z downlink cells, respectively, the UE includes in *UE-NR-Capability-r15* or in *UE-NR-Capability-r16* an indication for a maximum number of PDCCH candidates and a maximum number of non-overlapped CCEs the UE can monitor for downlink cells with *PDCCHMonitoringCapabilityConfig = R15 PDCCH monitoring capability* or for downlink cells with *PDCCHMonitoringCapabilityConfig = R16 PDCCH monitoring* capability when the UE is configured for carrier aggregation operation over more than Y downlink cells or over more than Z downlink cells, respectively, and with at least one downlink cells from the Y downlink cells and at least one downlink cell from the Z downlink cells. When a UE is not configured for NR-DC operation, the UE determines a capability to monitor a maximum number of PDCCH candidates and a maximum number of non-overlapped CCEs per slot or per span that corresponds to

$N_{cells,r15}^{cap-r16}$ downlink cells or to $N_{cells,r16}^{cap-r16}$ downlink cells, respectively, where

- $N_{cells,r15}^{cap-r16}$ is the number of configured downlink cells if the UE does not provide *pdcch-BlindDetectionCA-r15*
- otherwise, $N_{cells,r15}^{cap-r16}$ is the value of *pdcch-BlindDetectionCA-r15* and
- $N_{cells,r16}^{cap-r16}$ is the number of configured downlink cells if the UE does not provide *pdcch-BlindDetectionCA-r16*
- otherwise, $N_{cells,r16}^{cap-r16}$ is the value of *pdcch-BlindDetectionCA-r16*

Regarding PDCCH monitoring indication and dormancy/non-dormancy behavior for SCells, a UE configured with discontinuous reception ("DRX") mode operation on the primary cell ("PCell") or on the special cell ("SpCell"), e.g., a PCell of an MCG or SCG:

- a power saving ("PS")-RNTI for DCI format 2_6 by *ps-RNTI*
- a number of search space sets, by *dci-Format2-6,* to monitor PDCCH for detection of DCI format 2_6 on the active DL BWP of the PCell or of the SpCell according to a common search space
- a payload size for DCI format 2_6 by *SizeDCI_2-6*
- a location in DCI format 2_6 of a Wake-up indication bit by *PSPositionDCI2-6,* where

    - the UE may not start the *drx-onDurationTimer* for the next long DRX cycle when a value of the Wake-up indication bit is '0', and
    - the UE starts the *drx-onDurationTimer* for the next long DRX cycle when a value of the Wake-up indication bit is '1'

- a bitmap, when the UE is provided a number of groups of configured SCells by *Scell-groups-for-dormancy-outside-active-time,* where

    - the bitmap location is immediately after the Wake-up indication bit location
    - the bitmap size is equal to the number of groups of configured SCells where each bit of the bitmap corresponds to a group of configured SCells from the number of groups of configured SCells
    - a '0' value for a bit of the bitmap indicates an active DL BWP, provided by *dormant-BWP,* for the UE for each activated SCell in the corresponding group of configured SCells
    - a '1' value for a bit of the bitmap indicates
    - an active DL BWP, provided by *first-non-dormant-BWP-ID-for-DCI-outside-active-time,* for the UE for each activated SCell in the corresponding group of configured SCells, if a current active DL BWP is the dormant DL BWP
    - a current active DL BWP, for the UE for each activated SCell in the corresponding group of configured SCells, if the current active DL BWP is not the dormant DL BWP

- an offset by *ps-Offset* indicating a time, where the UE starts monitoring PDCCH for detection of DCI format 2_6 according to the number of search space sets, prior to a slot where the *drx-onDuarationTimer* would start on the PCell or on the SpCell

    - for each search space set, the PDCCH monitoring occasions are the ones in the first $T_s$ slots indicated by *duration,* or $T_s$ = 1 slot if *duration* is not provided, starting from the first slot of the first $T_s$ slots and ending prior to the start of *drx-onDurationTimer.*

The UE does not monitor PDCCH for detecting DCI format 2_6 during Active Time. If a UE reports for an active DL BWP a requirement of X slots prior to the beginning of a slot where the UE would start the *drx-onDurationTimer,* the UE is not required to monitor PDCCH for detection of DCI format 2_6 during the X slots, where X corresponds to the requirement of the SCS of the active DL BWP.

If a UE is provided search space sets to monitor PDCCH for detection of DCI format 2_6 in the active DL BWP of the PCell or of the SpCell and the UE does not detect DCI format 2_6

- if the UE is provided *ps-WakeupOrNot,* the UE is indicated by *ps-WakeupOrNot* whether the UE may not start or whether the UE shall start the *drx-onDurationTimer* for the next DRX cycle

- if the UE is not provided *ps-WakeupOrNot,* the UE may not start Active Time indicated by *drx-onDurationTimer* for the next DRX cycle

If a UE is provided search space sets to monitor PDCCH for detection of DCI format 2_6 in the active DL BWP of the PCell or of the SpCell and the UE

- is not required to monitor PDCCH for detection of DCI format 2_6 for all corresponding PDCCH monitoring occasions outside Active Time prior to a next DRX cycle, or
- does not have any PDCCH monitoring occasions for detection of DCI format 2_6 outside Active Time of a next DRX cycle

the UE shall start the *drx-onDurationTimer* for the next DRX cycle.

If a UE is provided search space sets to monitor PDCCH for detection of DCI format 0_1 and DCI format 1_1 and if one or both of DCI format 0_1 and DCI format 1_1 include a SCell dormancy indication field,

- the SCell dormancy indication field is a bitmap with size equal to a number of groups of configured SCells, provided by *Scell-groups-for-dormancy-within-active-time,*
- each bit of the bitmap corresponds to a group of configured SCells from the number of groups of configured SCells
- if the UE detects a DCI format 0_1 or a DCI format 1_1 that does not include a carrier indicator field, or detects a DCI format 0_1 or DCI format 1_1 that includes a carrier indicator field with value equal to 0
- a '0' value for a bit of the bitmap indicates an active DL BWP, provided by *dormant-BWP,* for the UE for each activated SCell in the corresponding group of configured SCells
- a '1' value for a bit of the bitmap indicates

  - an active DL BWP, provided by *first-non-dormant-BWP-ID-for-DCI-inside-active-time,* for the UE for each activated SCell in the corresponding group of configured SCells, if a current active DL BWP is the dormant DL BWP
  - a current active DL BWP, for the UE for each activated SCell in the corresponding group of configured SCells, if the current active DL BWP is not the dormant DL BWP

- the UE sets the active DL BWP to the indicated active DL BWP

If a UE is provided search space sets to monitor PDCCH for detection of DCI format 1_1, and if

- the CRC of DCI format 1_1 is scrambled by a C-RNTI or a MCS-C-RNTI, and if
- *resourceAllocation = resourceAllocationType0* and all bits of the frequency domain resource assignment field in DCI format 1_1 are equal to 0, or
- *resourceAllocation = resourceAllocationType1* and all bits of the frequency domain resource assignment field in DCI format 1_1 are equal to 1
- *resourceAllocation = dynamicSwitch* and all bits of the frequency domain resource assignment field in DCI format 1_1 are equal to 0 or 1

the UE considers the DCI format 1_1 as indicating SCell dormancy, not scheduling a PDSCH reception or indicating a semi-persistent scheduling ("SPS") PDSCH release, and for transport block 1 interprets the sequence of fields of

- modulation and coding scheme
- new data indicator
- redundancy version
- and of
- hybrid automatic repeat request ("HARQ") process number
- antenna port(s)
- demodulation reference signal ("DMRS") sequence initialization
  as providing a bitmap to each configured SCell, in an ascending order of the SCell index, where
- a '0' value for a bit of the bitmap indicates an active DL BWP, provided by *dormant-BWP,* for the UE for a corresponding activated SCell
- a '1' value for a bit of the bitmap indicates

- an active DL BWP, provided by *first-non-dormant-BWP-ID-for-DCI-inside-active-time,* for the UE for a corresponding activated SCell, if a current active DL BWP is the dormant DL BWP

- a current active DL BWP, for the UE for a corresponding activated SCell, if the current active DL BWP is not the dormant DL BWP

- the UE sets the active DL BWP to the indicated active DL BWP

If an active DL BWP provided by *dormant-BWP* for a UE on an activated SCell is not a default DL BWP for the UE on the activated SCell, as described in Clause 12, the BWP inactivity timer is not used for transitioning from the active DL BWP provided by *dormant-BWP* to the default DL BWP on the activated SCell.

Regarding search space set switching, a UE can be provided a group index for a respective search space set by *searchSpaceGroupIdList-r16* for PDCCH monitoring on a serving cell. If the UE is not provided *searchSpaceGroupIdList-r16* for a search space set, the following procedures are not applicable for PDCCH monitoring according to the search space set.

If a UE is provided *searchSpaceSwitchingGroupList-r16,* indicating one or more groups of serving cells, the following procedures apply to all serving cells within each group; otherwise, the following procedures apply only to a serving cell for which the UE is provided *searchSpaceGroupIdList-r16.*

A UE can be provided, by *searchSpaceSwitchingTimer-r16,* a timer value. The UE decrements the timer value by one after each slot in the active DL BWP of the serving cell where the UE monitors PDCCH for detection of DCI format 2_0.

If a UE is provided by *SearchSpaceSwitchTrigger-r16* a location of a search space set switching field for a serving cell in a DCI format 2_0, as described in Clause 11.1.1, and detects the DCI format 2_0 in a slot

- if the UE is not monitoring PDCCH according to search space sets with group index 0, the UE starts monitoring PDCCH according to search space sets with group index 0, and stops monitoring PDCCH according to search space sets with group index 1, on the serving cell at a first slot that is at least P symbols after the last symbol of the PDCCH with the DCI format 2_0, if a value of the search space set switching field is 0
- if the UE is not monitoring PDCCH according to search space sets with group index 1, the UE monitors PDCCH according to search space sets with group index 1, and stops monitoring PDCCH according to search space sets with group index 0, on the serving cell at a first slot that is at least P symbols after the last symbol of the PDCCH with the DCI format 2_0, and the UE sets the timer value to the value provided by *searchSpaceSwitchingTimer-r16,* if a value of the search space set switching field is 1
- if the UE monitors PDCCH on a serving cell according to search space sets with group index 1, the UE starts monitoring PDCCH on the serving cell according to search space sets with group index 0, and stops monitoring PDCCH according to search space sets with group index 1, on the serving cell at the beginning of the first slot that is at least P symbols after a slot where the timer expires or after a last symbol of a remaining channel occupancy duration for the serving cell that is indicated by DCI format 2_0

If a UE is not provided *SearchSpaceSwitchirigger-r16* for a serving cell,

- if the UE detects a DCI format by monitoring PDCCH according to a search space set with group index 0, the UE starts monitoring PDCCH according to search space sets with group index 1, and stops monitoring PDCCH according to search space sets with group index 0, on the serving cell at a first slot that is at least P symbols after the last symbol of the PDCCH with the DCI format, the UE sets the timer value to the value provided by *searchSpaceSwitchingTimer-r16* if the UE detects a DCI format by monitoring PDCCH in any search space set
- if the UE monitors PDCCH on a serving cell according to search space sets with group index 1, the UE starts monitoring PDCCH on the serving cell according to search space sets with group index 0, and stops monitoring PDCCH according to search space sets with group index 1, on the serving cell at the beginning of the first slot that is at least P symbols after a slot where the timer expires or, if the UE is provided a search space set to monitor PDCCH for detecting a DCI format 2_0, after a last symbol of a remaining channel occupancy duration for the serving cell that is indicated by DCI format 2_0.

Regarding search space, the information element ("IE") *SearchSpace,* see below, defines how/where to search for PDCCH candidates. Each search space is associated with one *ControlResourceSet.* For a scheduled cell in the case of cross carrier scheduling, except for *nrofCandidates,* all the optional fields are absent.

```
-- ASN1START
-- TAG-SEARCHSPACE-START


SearchSpace ::=              SEQUENCE {
    searchSpaceId               SearchSpaceId,
    controlResourceSetId            ControlResourceSetId              OPTIONAL,
-- Cond SetupOnly
    monitoringSlotPeriodicityAndOffset    CHOICE {
        sl1                 NULL,
        sl2                 INTEGER (0..1),
        sl4                 INTEGER (0..3),
        sl5                 INTEGER (0..4),
        sl8                 INTEGER (0..7),
        sl10                INTEGER (0..9),
        sl16                INTEGER (0..15),
        sl20                INTEGER (0..19),
        sl40                INTEGER (0..39),
        sl80                INTEGER (0..79),
        sl160               INTEGER (0..159),
```

```
        sl320                INTEGER (0..319),
        sl640                INTEGER (0..639),
        sl1280               INTEGER (0..1279),
        sl2560               INTEGER (0..2559)
    }                                              OPTIONAL,  -- Cond Setup
    duration             INTEGER (2..2559)                 OPTIONAL,  --
Need R
    monitoringSymbolsWithinSlot     BIT STRING (SIZE (14))
OPTIONAL,  -- Cond Setup
    nrofCandidates           SEQUENCE {
        aggregationLevel1        ENUMERATED {n0, n1, n2, n3, n4, n5, n6, n8},
        aggregationLevel2        ENUMERATED {n0, n1, n2, n3, n4, n5, n6, n8},
        aggregationLevel4        ENUMERATED {n0, n1, n2, n3, n4, n5, n6, n8},
        aggregationLevel8        ENUMERATED {n0, n1, n2, n3, n4, n5, n6, n8},
        aggregationLevel16        ENUMERATED {n0, n1, n2, n3, n4, n5, n6, n8}
    }                                              OPTIONAL,  -- Cond Setup
    searchSpaceType          CHOICE {
        common               SEQUENCE {
            dci-Format0-0-AndFormat1-0        SEQUENCE {

                ...
            }                                      OPTIONAL,  -- Need R
            dci-Format2-0            SEQUENCE {
                nrofCandidates-SFI          SEQUENCE {
                    aggregationLevel1           ENUMERATED {n1, n2}
OPTIONAL,  -- Need R
                    aggregationLevel2           ENUMERATED {n1, n2}
OPTIONAL,  -- Need R
                    aggregationLevel4           ENUMERATED {n1, n2}
OPTIONAL,  -- Need R
                    aggregationLevel8           ENUMERATED {n1, n2}
OPTIONAL,  -- Need R
                    aggregationLevel16          ENUMERATED {n1, n2}
OPTIONAL    -- Need R
                },
```

```
    ...
    }                                              OPTIONAL,   -- Need R
    dci-Format2-1                SEQUENCE {
        ...
    }                                              OPTIONAL,   -- Need R
    dci-Format2-2                SEQUENCE {
        ...
    }                                              OPTIONAL,   -- Need R
    dci-Format2-3                SEQUENCE {
        dummy1                      ENUMERATED {sl1, sl2, sl4, sl5, sl8, sl10, sl16, sl20}
OPTIONAL,   -- Cond Setup
        dummy2                      ENUMERATED {n1, n2},
        ...
    }                                              OPTIONAL   -- Need R
    },
    ue-Specific                  SEQUENCE {
        dci-Formats                 ENUMERATED {formats0-0-And-1-0, formats0-1-
And-1-1},
        ...,
        [[
        dci-FormatsSL-r16           ENUMERATED {formats0-0-And-1-0, formats0-1-And-
1-1, formats3-0, formats3-1,
                                    formats3-0-And-3-1}              OPTIONAL,   --
Need R
        dci-FormatsExt-r16          ENUMERATED {formats0-1-And-1-1, formats0-2-And-
1-2, formats0-1-And-1-1And-0-2-And-1-2}
                                                   OPTIONAL,   -- Need N
        searchSpaceGroupIdList-r16     SEQUENCE (SIZE (1.. 2)) OF INTEGER (0..1)
OPTIONAL,   -- Need R
        freqMonitorLocations-r16       BIT STRING (SIZE (5))
OPTIONAL   -- Need R
        ]]
    }
    }                                              OPTIONAL   -- Cond Setup2
```

```
}


SearchSpace-v16xy ::=              SEQUENCE {
    searchSpaceId                 SearchSpaceId,
    controlResourceSetId-r16          ControlResourceSetId-r16
OPTIONAL,  -- Cond SetupOnly
    searchSpaceType-r16           CHOICE {
        common-r16                SEQUENCE {
            dci-Format2-4-r16         SEQUENCE {
                nrofCandidates-CI-r16         SEQUENCE {
                    aggregationLevel1         ENUMERATED {n1, n2}
OPTIONAL,  -- Need R
                    aggregationLevel2         ENUMERATED {n1, n2}
OPTIONAL,  -- Need R
                    aggregationLevel4         ENUMERATED {n1, n2}
OPTIONAL,  -- Need R
                    aggregationLevel8         ENUMERATED {n1, n2}
OPTIONAL,  -- Need R
                    aggregationLevel16        ENUMERATED {n1, n2}
OPTIONAL   -- Need R
                },
                ...
            },
            dci-Format2-5-v16xy       SEQUENCE {
                nrofCandidates-IAB-r16        SEQUENCE {
                    aggregationLevel1-r16         ENUMERATED {n1, n2}
OPTIONAL,  -- Need R
                    aggregationLevel2-r16         ENUMERATED {n1, n2}
OPTIONAL,  -- Need R
                    aggregationLevel4-r16         ENUMERATED {n1, n2}
OPTIONAL,  -- Need R
                    aggregationLevel8-r16         ENUMERATED {n1, n2}
OPTIONAL,  -- Need R
```

```
                    aggregationLevel16-r16              ENUMERATED {n1, n2}
            OPTIONAL    -- Need R

                    },

                    ...

            },

            dci-Format2-6-r16              SEQUENCE {

                    ...

            }                                                        OPTIONAL,   -- Need R

            ...

            },

            mt-Specific-v16xy              SEQUENCE {

                dci-Formats-r16                ENUMERATED {formats2-0-And-2-5},

                    ...

            }

                }

    OPTIONAL    -- Cond Setup2

    }


    -- TAG-SEARCHSPACE-STOP

    -- ASN1STOP
```

In one implementation of the solution, described below, a cell serving reduced capability UEs always configures a bandwidth of a CORESET with an index zero (e.g., CORESETO, a CORESET for an associated Type0-PDCCH CSS for a DCI format with CRC scrambled by a SI-RNTI on the primary cell of the MCG) to be equal to or less than a minimum UE bandwidth of the reduced capability UEs for a given frequency band. That is, a reduced capability UE(s) does not expect that the bandwidth of CORESETO is larger than the predefined minimum UE bandwidth for the UE(s).

In another implementation described below, a cell serving reduced capability UEs in addition to Rel-15/16 NR UEs may configure a bandwidth of the CORESETO larger than the minimum UE bandwidth of the reduced capability UEs. In this case, the cell may provide a separate CORESETO of a separate Type0-PDCCH CSS for the reduced capability UEs. The reduced capability UEs may initiate identifying configuration information of the separate CORESETO and the corresponding separate Type0-PDCCH CSS intended for the reduced capability UEs, once determining that a bandwidth of a legacy (e.g. NR Rel-15/16) CORESETO of a legacy Type0-PDCCH CSS set configured by *pdcch-ConfigSIB1* in *MIB,* by *searchSpaceSIB1* in *PDCCH-ConfigCommon,* or by *searchSpaceZero* in *PDCCH-ConfigCommon* is wider than the minimum UE bandwidth of the reduced capability UEs for the given frequency band. In this case, *pdcch-ConfigSIB1* in *MIB, searchSpaceSIB1* in *PDCCH-ConfigCommon,* or *searchSpaceZero* in *PDCCH-ConfigCommon* may indicate a selection from a set of predefined CORESET/search space configurations for the reduced capability UEs In one example, the predefined CORESET/search space configuration(s) for the reduced capability UEs may be based on the indicated *pdcch-ConfigSIB1* in *MIB,* by *searchSpaceSIB1* in *PDCCH-ConfigCommon,* or by *searchSpaceZero* in *PDCCH-ConfigCommon* (e.g., slot offset, max limit on number of RBs for CORESET, RB offset).

Regarding scheduling based dynamic PDCCH skipping, according to Clause 5.1 of TS 38.214 (Rel-16), for any HARQ process ID(s) in a given scheduled cell, a UE is not expected to receive a PDSCH that overlaps in time with another PDSCH. The UE is not expected to receive another PDSCH for a given HARQ process until after the end of the expected transmission of HARQ-ACK for that HARQ process, where the timing is given by Clause 9.2.3 of TS 38.213. In a given scheduled cell, the UE is not expected to receive a first PDSCH in slot i, with the corresponding HARQ-ACK assigned to be transmitted in slot *j*, and a second PDSCH starting later than the first PDSCH with its corresponding HARQ-ACK assigned to be transmitted in a slot before slot *j*. For any two HARQ process IDs in a given scheduled cell, if the UE is scheduled to start receiving a first PDSCH starting in symbol j by a PDCCH ending in symbol *i,* the UE is not expected to be scheduled to receive a PDSCH starting earlier than the end of the first PDSCH with a PDCCH that ends later than symbol i.

According to Clause 6.1 of TS 38.214 (Rel-16), when a UE is scheduled with multiple PUSCHs by a DCI, HARQ process ID indicated by this DCI applies to the first PUSCH, as described in clause 6.1.2.1, HARQ process ID is then incremented by 1 for each subsequent PUSCH(s) in the scheduled order, with modulo 16 operation applied. For any HARQ process ID(s) in a given scheduled cell, the UE is not expected to transmit a PUSCH that overlaps in time with another PUSCH. For any two HARQ process IDs in a given scheduled cell, if the UE is scheduled to start a first PUSCH transmission starting in symbol j by a PDCCH ending in symbol *i,* the UE is not expected to be scheduled to transmit a PUSCH starting earlier than the end of the first PUSCH by a PDCCH that ends later than symbol i. The UE is not expected to be scheduled to transmit another PUSCH by DCI format 0_0, 0_1 or 0_2 scrambled by C-RNTI or MCS-C-RNTI for a given HARQ process until after the end of the expected transmission of the last PUSCH for that HARQ process.

In one embodiment, if a UE detects a DCI of a DCI format in a first cell scheduling at least one PDSCH and/or at least one PUSCH on at least one slot of a second cell, the UE skips monitoring the DCI format (e.g., does not perform blind decoding of PDCCH candidates for the DCI format) on a first set of PDCCH monitoring occasions out of a plurality of PDCCH monitoring occasions for the DCI format in the first cell. The first cell is a scheduling cell, and the second cell is a scheduled cell. The first cell is different than the second cell for cases of cross-carrier scheduling. The first cell is same as the second cell for cases of self-carrier scheduling. In one example, the UE may skip monitoring DCI formats of a particular/first type (e.g., uplink scheduling, downlink assignment, group-common; may be the same type as the detected DCI format type; in common and/or UE-specific search space) on the first set of PDCCH monitoring occasions.

In one implementation, the UE may determine the first set of PDCCH monitoring occasions based on scheduling information in the detected DCI. For example, the first set of PDCCH monitoring occasions is determined based on the number of scheduled PDSCHs and/or PUSCHs, a scheduling offset value (e.g., a start time offset of the earliest scheduled PDSCH/PUSCH with respect to an ending slot/symbol of the scheduling DCI), and/or the number of PDSCH/PUSCH repetitions. The UE may further receive additional information to be used to determine the first set of PDCCH monitoring occasions. For example, the additional information includes the minimum scheduling offset values for PDSCH and PUSCH, respectively, and/or an indication of whether out-of-order scheduling is allowed. With out-of-order scheduling enabled, for any two HARQ process IDs in a given scheduled cell, if the UE is scheduled to start receiving a first PDSCH starting in symbol j by a PDCCH ending in symbol *i,* the UE can be scheduled to receive a PDSCH starting earlier than the end of the first PDSCH with a PDCCH that ends later than symbol i. Similarly, for any two HARQ process IDs in a given scheduled cell, if the UE is scheduled to start a first PUSCH transmission starting in symbol j by a PDCCH ending in symbol *i,* the UE can be scheduled to transmit a PUSCH starting earlier than the end of the first PUSCH by a PDCCH that ends later than symbol i. In one example, the UE may determine the first set of PDCCH monitoring occasions based on an indicated or configured number of PDCCH monitoring occasions (or slots) to skip in the detected DCI. The number of PDCCH monitoring occasions (or slots) to skip may be based on the configured/indicated minimum scheduling offset value.

In one example implementation, for a given scheduled PDSCH or PUSCH in the second cell (e.g., the scheduled cell), the first set of PDCCH monitoring occasions to skip monitoring the DCI format in the first cell (e.g., the scheduling cell) is a set of consecutive PDCCH monitoring occasions for the DCI format, which starts from a PDCCH monitoring occasion right after a PDCCH monitoring occasion, where the UE has detected the DCI scheduling the given PDSCH or PUSCH, and ends at the latest DCI monitoring occasion, where a DCI scheduling the given PDSCH or PUSCH can potentially be transmitted according to the configured/indicated minimum scheduling offset restriction by a network entity.

In another example implementation, for a given set of scheduled PDSCHs or PUSCHs in the second cell (e.g., the scheduled cell), the first set of PDCCH monitoring occasions to skip monitoring the DCI format in the first cell (e.g., the scheduling cell) is a set of consecutive PDCCH monitoring occasions for the DCI format, which starts from a PDCCH monitoring occasion right after a PDCCH monitoring occasion, where the UE has detected the DCI scheduling the given set of PDSCHs or PUSCHs, and ends at the latest DCI monitoring occasion, where a DCI scheduling the last PDSCH or PUSCH from the given set of scheduled PDSCHs or PUSCHs can potentially be transmitted according to the configured/indicated minimum scheduling offset restriction by a network entity.

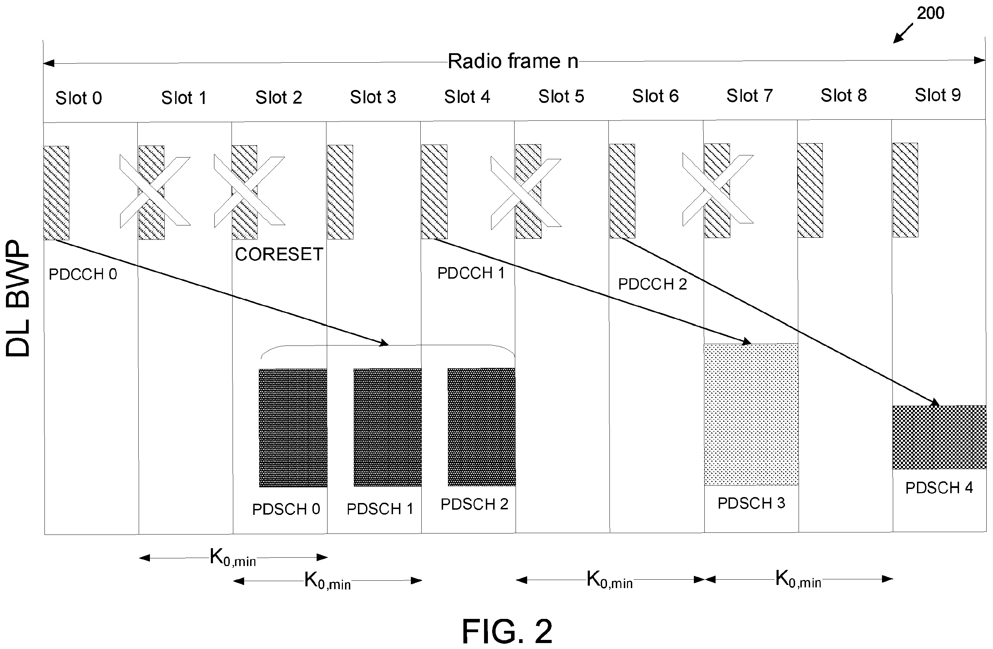

In an example shown in Figure 2, the UE detects the first DCI (e.g., PDCCH 0) on slot 0 scheduling PDSCHs 0-2 on slots 2, 3, and 4, respectively. With $K_{0,min}$ equal to 2, the UE can be scheduled on slot 3 via a PDCCH the latest on slot 1. Similarly, the UE can be scheduled on slot 4 via a PDCCH the latest on slot 2. Since the UE has already been scheduled with PDSCHs 2 and 3 on slots 3 and 4, respectively, the UE skips monitoring of the DCI format on slots 1 and 2 (if configured and/or if dynamically indicated for skipping). Once the UE detects the second DCI (e.g., PDCCH 1) on slot 4 scheduling PDSCH 3 on slot 7, the UE skips monitoring of the DCI format on slot 5, the latest slot where the UE can receive a PDCCH scheduling a PDSCH on slot 7. Similarly, upon detecting the third DCI (e.g., PDCCH 2) on slot 6 scheduling PDSCH 4 on slot 9, the UE skips monitoring of the DCI format on slot 7, the latest slot where the UE can receive a PDCCH scheduling a PDSCH on slot 7.

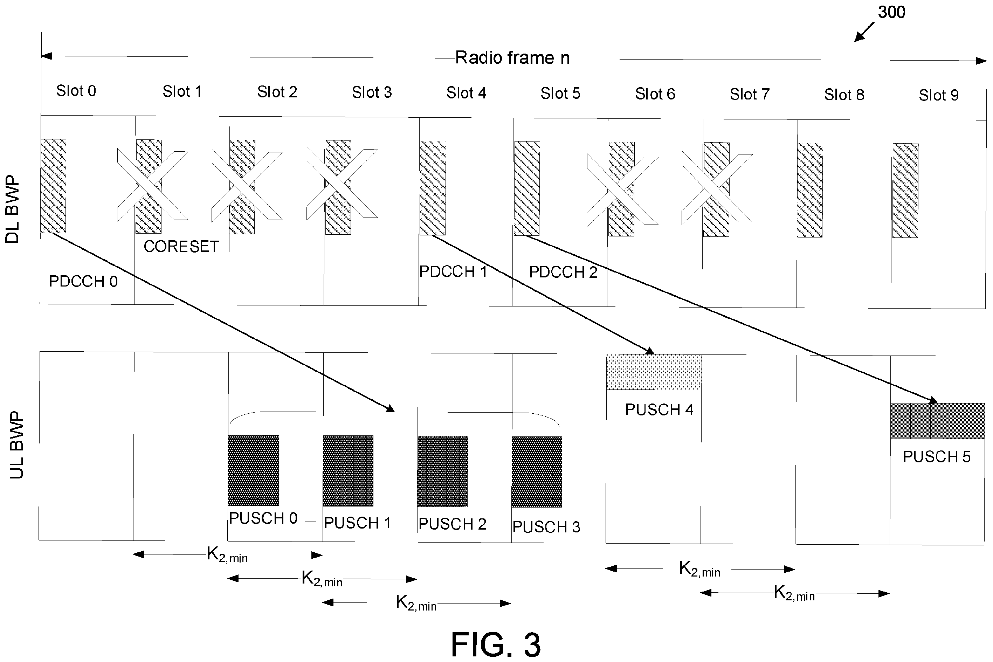

In another example shown in Figure 3, the UE detects the first DCI (e.g., PDCCH 0) on slot 0 scheduling PUSCHs 0-4 on slots 2-5, respectively. With $K_{0,min}$ equal to 2, if configured and/or dynamically indicated for skipping, the UE skips monitoring of the DCI format from slot 1 (e.g., right after slot 0 where the UE has detected the DCI) to slot 3 (e.g., the latest slot where the UE can receive a PDCCH scheduling a PUSCH on slot 5). Since PUSCH 5 on slot 6 is scheduled via the second DCI (e.g., PDCCH 1) on slot 4, the latest slot where the UE can receive a PDCCH scheduling a PUSCH on slot 6, the UE monitors the DCI format at the next PDCCH monitoring occasion, e.g., on slot 5. Upon detecting the third DCI (PDCCH 3) on slot 5 scheduling PUSCH 6 on slot 9, the UE skips monitoring of the DCI format from slot 6 (e.g., right after slot 5 where the UE has detected the DCI) to slot 7 (e.g., the latest slot where the UE can receive a PDCCH scheduling a PUSCH on slot 9). If out-of-order scheduling is enabled for the UE, the UE monitors the DCI format on slot 6, the latest slot where the UE can receive a PDCCH scheduling a PUSCH on slot 8.

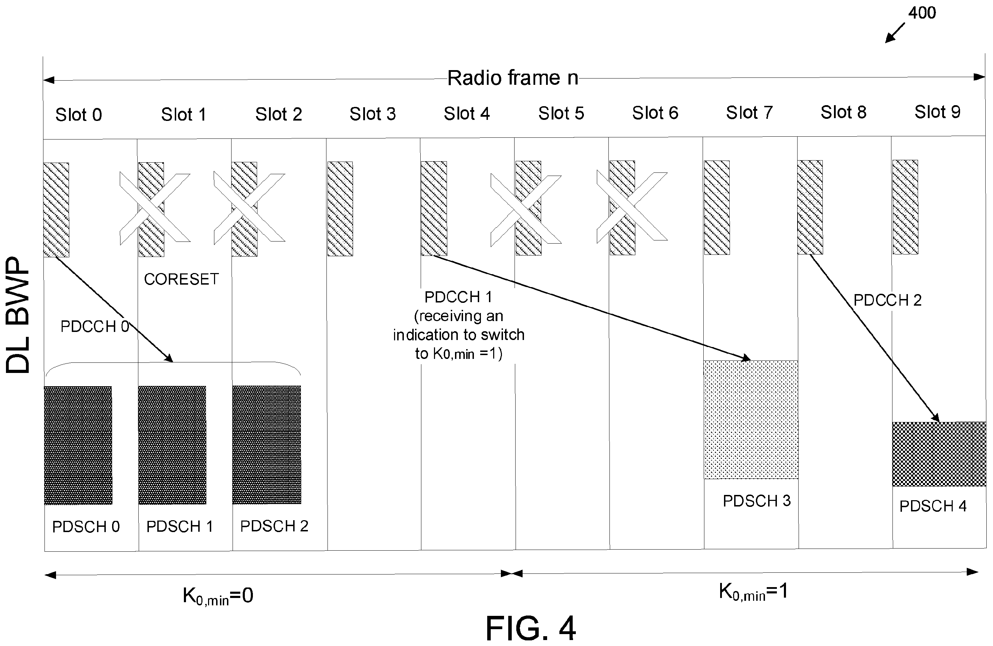

In an example shown in Figure 4, the minimum applicable scheduling offset $K_{0, min}$ was set to zero before slot 4, and the UE receives, on slot 4, an indication that the $K_{0, min}$ value changes from zero to one, via PDCCH 1 scheduling PDSCH 3 on slot 7. With an application delay of 1 slot, the UE applies the new $K_{0, min}$ value (e.g., $K_{0, min}$ =1) from slot 5. If out-of-order scheduling is not allowed/enabled, the UE skips monitoring the DCI format from slot 5 to slot 6, the latest slot where the UE can receive a PDCCH scheduling a PDSCH on slot 7.

In another implementation, the UE may receive information of a second set of PDCCH monitoring occasions selected from the plurality of PDCCH monitoring occasions, where the UE performs monitoring of the DCI format on the second set of PDCCH monitoring occasions. Information of the first set of PDCCH monitoring occasions and/or the second set of PDCCH monitoring occasions may be included in the scheduling DCI.

In yet another implementation, the UE may receive an indication of whether to skip monitoring of the DCI format on the first set of PDCCH monitoring occasions or not in the scheduling DCI. An example implementation of joint encoding of the minimum applicable scheduling offset and an indication of PDCCH monitoring skipping is shown below.

For a DCI format scheduling at least one PDSCH and/or PUSCH, one of DCI fields in the DCI format is given by:
• Minimum applicable scheduling offset indicator - 0, 1, or 2 bits
• 0 bit if higher layer parameter *minimumSchedulingOffset* is not configured;
• 1 bit if higher layer parameter *minimumSchedulingOffset* is configured. The 1 bit indication is used to determine the minimum applicable K0 for the active DL BWP and the minimum applicable K2 value for the active UL BWP according to Table 7.3.1.1.2-33. If the minimum applicable K0 is indicated, the minimum applicable value of the aperiodic CSI-RS triggering offset for an active DL BWP shall be the same as the minimum applicable K0 value.
• 2 bits if higher layer parameter minimumSchedulingOffset is configured and if higher layer parameter *dciMonitoringSkip* is configured. In one example shown in Table X1, the MSB determines the minimum applicable K0 for the active DL BWP and the minimum applicable K2 value for the active UL BWP. The LSB determines whether to skip monitoring of the DCI format on a set of slots, where the set of slots are determined with respect to a slot, where the DCI format is detected, based on the minimum applicable scheduling offset values for PDSCH/PUSCH. In another example shown in Table X2, each index indicated by the 2-bit field represents a different combination of the minimum applicable K0/K2 values and DCI monitoring behaviors, where the UE may receive an association indication of a first and second DCI format with the DCI format.

Table 3: Joint indication of minimum applicable scheduling offset K0/K2 and skipping of DCI monitoring for the DCI format

| Bit field mapped to index | Minimu applicable K0 for the active DL BWP, if *minimumSchedulingOffset* is configured for the DL BWP | Minimum applicable K2 for the active UL BWP, if *minimumSchedulingOffset* is configured for the UL BWP | Skipping of DCI monitoring for the DCI format, if *dciMonitoringSkip* is configured for the DL BWP |
|---|---|---|---|
| 0 | The first value configured by *minimumSchedulingOffset* for the active DL BWP | The first value configured by *minimumSchedulingOffset* for the active UL BWP | Monitoring the DCI format as configured |
| 1 | The first value configured by *minimumSchedulingOffset* for the active DL BWP | The first value configured by *minimumSchedulingOffset* for the active UL BWP | Skipping of DCI monitoring for the DCI format |
| 2 | The second value configured by *minimumSchedulingOffset* for the active DL BWP if the second value is configured; 0 otherwise | The second value configured by *minimumSchedulingOffset* for the active UL BWP if the second value is configured; 0 otherwise | Monitoring the DCI format as configured |

(continued)

| Bit field mapped to index | Minimu applicable K0 for the active DL BWP, if *minimumSchedulingOffset* is configured for the DL BWP | Minimum applicable K2 for the active UL BWP, if *minimumSchedulingOffset* is configured for the UL BWP | Skipping of DCI monitoring for the DCI format, if *dciMonitoringSkip* is configured for the DL BWP |
|---|---|---|---|
| 3 | The second value configured by *minimumSchedulingOffset* for the active DL BWP if the second value is configured; 0 otherwise | The second value configured by *minimumSchedulingOffset* for the active UL BWP if the second value is configured; 0 otherwise | Skipping of DCI monitoring for the DCI format |

Table 4: Joint indication of minimum applicable scheduling offset K0/K2 and skipping of DCI monitoring

| Bit field mapped to index | Minimum applicable K0 for the active DL BWP, if *minimumSchedulingOffset* is configured for the DL BWP | Minimum applicable K2 for the active UL BWP, if *minimumSchedulingOffset* is configured for the UL BWP | Skipping of DCI monitoring, if *dciMonitoringSkip* is configured for the DL BWP |
|---|---|---|---|
| 0 | The first value configured by *minimumSchedulingOffset* for the active DL BWP | The first value configured by *minimumSchedulingOffset* for the active UL BWP | Skipping of DCI monitoring for the DCI format |
| 1 | The first value configured by *minimumSchedulingOffset* for the active DL BWP | The first value configured by *minimumSchedulingOffset* for the active UL BWP | Skipping of DCI monitoring for the DCI format and a first associated DCI format |
| 2 | The first value configured by *minimumSchedulingOffset* for the active DL BWP | The first value configured by *minimumSchedulingOffset* for the active UL BWP | Skipping of DCI monitoring for the DCI format and first and second associated DCI formats |
| 3 | The second value configured by *minimumSchedulingOffset* for the active DL BWP if the second value is configured; 0 otherwise | The second value configured by *minimumSchedulingOffset* for the active UL BWP if the second value is configured; 0 otherwise | Monitoring all DCI formats as configured |

In another embodiment, if a UE detects a DCI of a DCI format on a first cell scheduling at least one PDSCH and/or at least one PUSCH on at least one slot of a second cell, the UE skips monitoring of the DCI format (e.g., does not perform blind decoding of PDCCH candidates for the DCI format) on a first set of slots out of a plurality of slots of the first cell, where each of the plurality of slots include at least one configured PDCCH monitoring occasion for the DCI format. The first cell is a scheduling cell, and the second carrier is a scheduled cell. The first cell is different than the second cell for cases of cross-carrier scheduling. In one example, the UE may skip monitoring DCI formats of a particular/first type (e.g., uplink scheduling, downlink assignment, group-common; may be the same type as the detected DCI format type; in common and/or UE-specific search space) on the first set of slots out of the plurality of slots of the first cell, where each of the plurality of slots include at least one configured PDCCH monitoring occasion for the at least one DCI format of the particular/first type.

The methods disclosed in this disclosure also include any combination of above mentioned embodiments, implementations, and examples.

Regarding enhanced power saving channel for adaptation of PDCCH monitoring, in one embodiment, a UE is configured with a plurality of values for one or more search space configuration parameters in a given search space configuration or a plurality sets of search space configuration parameters in the given search space configuration. The UE further receives an indication of which parameter value(s) or which parameter set to apply in order to determine corresponding PDCCH monitoring occasion(s).

In one example, each of the search space configuration parameters, *monitoringSlotPeriodicityAndOffset*, *monitoringSymbolsWithinSlot*, and *duration*, is configured with two values, a first value and a second value, where the first values of the parameters are applied together for a first operation mode and the second values of the parameters are applied together for a second operation mode. In an example implementation, the first operation mode is span-based PDCCH monitoring, and the second operation mode is slot-based monitoring.

- a PDCCH monitoring periodicity of $k_s$ slots and a PDCCH monitoring offset of $O_s$ slots, by *monitoringSlotPeriodicityAndOffset*
- a PDCCH monitoring pattern within a slot, indicating first symbol(s) of the CORESET within a slot for PDCCH monitoring, by *monitoringSymbolsWithinSlot*
- a duration of $T_s < k_s$ slots indicating a number of slots that the search space set *s* exists by *duration*

In another example, two sets of the search space configuration parameters are configured for a search space set:

- *monitoringSlotPeriodicityAndOffset, monitoringSymbolsWithinSlot,* and duration
- *monitoringSlotPeriodicityAndOffset2, monitoringSymbolsWithinSlot2,* and duration2

In one implementation, the indication of which parameter value or parameter set to apply to identify PDCCH monitoring occasions may be received together with a wake-up indication. For example, DCI format 2_6 in a group-common PDCCH can be enhanced as shown below.

Enhanced DCI format 2_6 is used for notifying the power saving information outside DRX Active Time for one or more UEs.

The following information is transmitted by means of the DCI format 2_6 with CRC scrambled by PS-RNTI:

- block number 1, block number 2,..., block number *N*, where the starting position of a block is determined by the parameter *PSPositionDCI2-6* provided by higher layers for the UE configured with the block.

If the UE is configured with higher layer parameter *PS-RNTI* and *dci-Format2-6,* one block is configured for the UE by higher layers, with the following fields defined for the block:

- Wake-up indication - 1 bit
- SCell dormancy indication - 0 bit if higher layer parameter *Scell-groups-for-dormancy-outside-active-time* is not configured (including a reduced capability UE that does not have carrier aggregation capability); otherwise 1, 2, 3, 4 or 5 bits bitmap determined according to higher layer parameter *Scell-groups-for-dormancy-outside-active-time,* where each bit corresponds to one of the SCell group(s) configured by higher layers parameter *Scell-groups-for-dormancy-outside-active-time,* with MSB to LSB of the bitmap corresponding to the first to last configured SCell group.
- Search space parameter indication - 0 bit if higher layer parameter *searchSpaceAdaptationList* is not configured; otherwise 1, 2, 3, 4 or 5 bits bitmap determined according to higher layer parameter *searchSpaceAdaptationList,* where each bit corresponds to one of search space sets (or one of groups of search space sets) configured by higher layers parameter *searchSpaceAdaptationList,* with MSB to LSB of the bitmap corresponding to the first to last search space set (or the first to last group of search space sets) in *searchSpaceAdaptationList.* A value '0' for a bit of the bitmap indicates using a first parameter set for a search space set (or a group of search space sets), and a value '1' for the bit of the bitmap indicates using a second parameter set for the search space set (or the group of search space sets).

The size of DCI format 2_6 is indicated by the higher layer parameter *SizeDCI_2-6*.

In another implementation, the UE determines which search space configuration parameter value(s) or which search space configuration parameter set to apply based on the detection of a scheduling DCI, for example, the UE receives an indication of which search space configuration parameter value(s) or which search space configuration parameter set to apply in order to determine corresponding PDCCH monitoring occasion(s) in a scheduling DCI.

In yet another implementation, the UE determines which search space configuration parameter value(s) or which search space configuration parameter set to apply (e.g., to search space configuration in which DCI formats of a particular/first type (e.g., uplink scheduling) are monitored) based on a triggering of scheduling request ("SR") transmission and/or a buffer status report ("BSR") transmission. In one example, the UE may be configured with a first search space parameter value(s) or search space parameter set for a first SR/BSR configuration corresponding to a first logical channel/logical channel group (or logical channel type, logical channel priority, quality of service ("QoS") class identifier or the combination thereof), and a second search space parameter value(s) or search space parameter set for a second SR/BSR configuration corresponding to a second logical channel/logical channel group (logical channel type, logical channel priority, QoS class identifier or the combination thereof). The UE may determine the search space parameter value(s) or search space parameter set based on whether the SR/BSR is associated with the first SR/BSR configuration or the second SR/BSR configuration.

Regarding priority-based PDCCH monitoring, in one embodiment, a UE receives a plurality of search space configurations where each of the plurality of search space configurations includes information of a search space priority. The UE determines a plurality of PDCCH candidates to monitor per slot (or per span) and an associated plurality of non-overlapped CCEs per slot (or per span) based on the search space priorities of the plurality of search space configurations and performs blind decoding for the determined plurality of PDCCH candidates.

In one implementation, a search space priority is implicitly indicated via a search space index (e.g., higher layer parameter *searchSpaceId*). In another implementation, a search space priority may be indicated via a new Rel-17 NR higher layer parameter, e.g., *searchSpacePriorityIndex.*

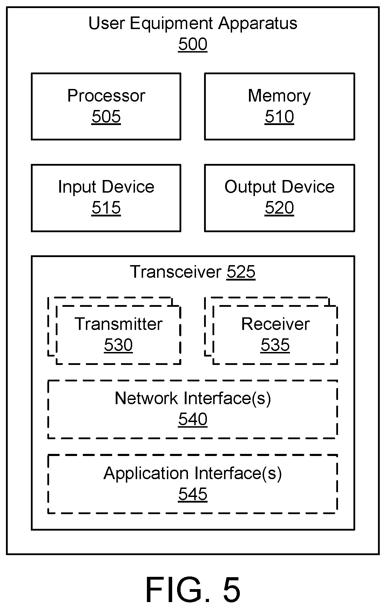

Figure 5 depicts a user equipment apparatus 500 that may be used for power efficient PDCCH monitoring, according to embodiments of the disclosure. In various embodiments, the user equipment apparatus 500 is used to implement one or more of the solutions described above. The user equipment apparatus 500 may be one embodiment of the remote unit 105 and/or the UE 205, described above. Furthermore, the user equipment apparatus 500 may include a processor 505, a memory 510, an input device 515, an output device 520, and a transceiver 525.

In some embodiments, the input device 515 and the output device 520 are combined into a single device, such as a touchscreen. In certain embodiments, the user equipment apparatus 500 may not include any input device 515 and/or output device 520. In various embodiments, the user equipment apparatus 500 may include one or more of: the processor 505, the memory 510, and the transceiver 525, and may not include the input device 515 and/or the output device 520.

As depicted, the transceiver 525 includes at least one transmitter 530 and at least one receiver 535. In some embodiments, the transceiver 525 communicates with one or more cells (or wireless coverage areas) supported by one or more base units 121. In various embodiments, the transceiver 525 is operable on unlicensed spectrum. Moreover, the transceiver 525 may include multiple UE panel supporting one or more beams. Additionally, the transceiver 525 may support at least one network interface 540 and/or application interface 545. The application interface(s) 545 may support one or more APIs. The network interface(s) 540 may support 3GPP reference points, such as Uu, N1, PC5, etc. Other network interfaces 540 may be supported, as understood by one of ordinary skill in the art.

The processor 505, in one embodiment, may include any known controller capable of executing computer-readable instructions and/or capable of performing logical operations. For example, the processor 505 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 505 executes instructions stored in the memory 510 to perform the methods and routines described herein. The processor 505 is communicatively coupled to the memory 510, the input device 515, the output device 520, and the transceiver 525. In certain embodiments, the processor 505 may include an application processor (also known as "main processor") which manages application-domain and operating system ("OS") functions and a baseband processor (also known as "baseband radio processor") which manages radio functions.

In various embodiments, the processor 505 controls the user equipment apparatus 500 to implement the above described UE behaviors. For example, the processor 505 may monitor a first downlink control information ("DCI") format according to a first search space configuration in a first cell, detect DCI of the first DCI format in the first cell scheduling at least one physical data channel on at least one slot of a second cell, and skip monitoring of a second DCI format on a set of physical downlink control channel ("PDCCH") monitoring occasions of a plurality of PDCCH monitoring occasions, the plurality of PDCCH monitoring occasions configured for the second DCI format by a second search space configuration.

In one embodiment, the processor 505 determines the set of PDCCH monitoring occasions based on the detected DCI. In some embodiments, the processor 505 ceases monitoring a plurality of DCI formats configured by the second search space configuration in response to detecting the DCI of the first DCI format and resumes monitoring the plurality of DCI formats configured by the second search space configuration in response to detecting DCI of a third DCI format.

In one embodiment, the transceiver 525 receives an association indication of the first search space configuration with the second search space configuration. In one embodiment, the transceiver 525 receives an indication of which search space configuration parameter values to apply to determine the corresponding plurality of PDCCH monitoring occasions. In some embodiments, the transceiver 525 receives a plurality of search space configurations where each of the plurality of search space configurations comprises information of a search space priority. The processor 505 may determine a plurality of PDCCH candidates to monitor and an associated plurality of non-overlapped control channel elements ("CCEs") based on the search space priorities for the plurality of search space configurations.

The memory 510, in one embodiment, is a computer readable storage medium. In some embodiments, the memory 510 includes volatile computer storage media. For example, the memory 510 may include a RAM, including dynamic RAM ("DRAM"), synchronous dynamic RAM ("SDRAM"), and/or static RAM ("SRAM"). In some embodiments, the memory 510 includes non-volatile computer storage media. For example, the memory 510 may include a hard disk drive, a flash memory, or any other suitable non-volatile computer storage device. In some embodiments, the memory 510 includes both volatile and non-volatile computer storage media.

In some embodiments, the memory 510 stores data related to power efficient PDCCH monitoring. For example, the memory 510 may store various parameters, panel/beam configurations, resource assignments, policies, and the like, as described above. In certain embodiments, the memory 510 also stores program code and related data, such as an operating system or other controller algorithms operating on the user equipment apparatus 500.

The input device 515, in one embodiment, may include any known computer input device including a touch panel, a button, a keyboard, a stylus, a microphone, or the like. In some embodiments, the input device 515 may be integrated with the output device 520, for example, as a touchscreen or similar touch-sensitive display. In some embodiments, the input device 515 includes a touchscreen such that text may be input using a virtual keyboard displayed on the touchscreen and/or by handwriting on the touchscreen. In some embodiments, the input device 515 includes two or more different devices, such as a keyboard and a touch panel.

The output device 520, in one embodiment, is designed to output visual, audible, and/or haptic signals. In some embodiments, the output device 520 includes an electronically controllable display or display device capable of outputting visual data to a user. For example, the output device 520 may include, but is not limited to, an LCD display, an LED display, an OLED display, a projector, or similar display device capable of outputting images, text, or the like to a user. As another, non-limiting, example, the output device 520 may include a wearable display separate from, but communicatively coupled to, the rest of the user equipment apparatus 500, such as a smart watch, smart glasses, a heads-up display, or the like. Further, the output device 520 may be a component of a smart phone, a personal digital assistant, a television, a table computer, a notebook (laptop) computer, a personal computer, a vehicle dashboard, or the like.

In certain embodiments, the output device 520 includes one or more speakers for producing sound. For example, the output device 520 may produce an audible alert or notification (e.g., a beep or chime). In some embodiments, the output device 520 includes one or more haptic devices for producing vibrations, motion, or other haptic feedback. In some embodiments, all, or portions of the output device 520 may be integrated with the input device 515. For example, the input device 515 and output device 520 may form a touchscreen or similar touch-sensitive display. In other embodiments, the output device 520 may be located near the input device 515.

The transceiver 525 communicates with one or more network functions of a mobile communication network via one or more access networks. The transceiver 525 operates under the control of the processor 505 to transmit messages, data, and other signals and also to receive messages, data, and other signals. For example, the processor 505 may selectively activate the transceiver 525 (or portions thereof) at particular times in order to send and receive messages.

The transceiver 525 includes at least transmitter 530 and at least one receiver 535. One or more transmitters 530 may be used to provide UL communication signals to a base unit 121, such as the UL transmissions described herein. Similarly, one or more receivers 535 may be used to receive DL communication signals from the base unit 121, as described herein. Although only one transmitter 530 and one receiver 535 are illustrated, the user equipment apparatus 500 may have any suitable number of transmitters 530 and receivers 535. Further, the transmitter(s) 530 and the receiver(s) 535 may be any suitable type of transmitters and receivers. In one embodiment, the transceiver 525 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 525, transmitters 530, and receivers 535 may be implemented as physically separate components that access a shared hardware resource and/or software resource, such as for example, the network interface 540.

In various embodiments, one or more transmitters 530 and/or one or more receivers 535 may be implemented and/or integrated into a single hardware component, such as a multi-transceiver chip, a system-on-a-chip, an ASIC, or other type of hardware component. In certain embodiments, one or more transmitters 530 and/or one or more receivers 535 may be implemented and/or integrated into a multi-chip module. In some embodiments, other components such as the network interface 540 or other hardware components/circuits may be integrated with any number of transmitters 530 and/or receivers 535 into a single chip. In such embodiment, the transmitters 530 and receivers 535 may be logically configured as a transceiver 525 that uses one more common control signals or as modular transmitters 530 and receivers 535 implemented in the same hardware chip or in a multi-chip module.

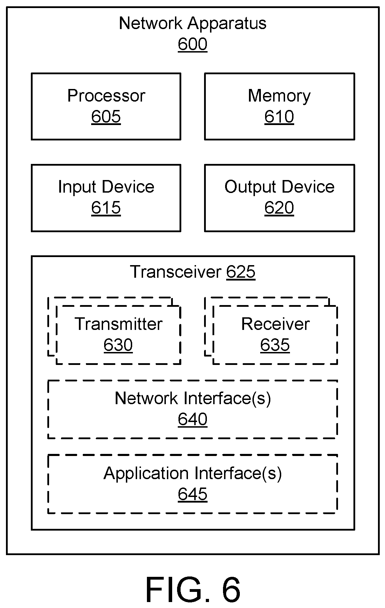

Figure 6 depicts a network apparatus 600 that may be used for power efficient PDCCH monitoring, according to embodiments of the disclosure. In one embodiment, network apparatus 600 may be one implementation of a RAN node, such as the base unit 121, the RAN node 210, or gNB, described above. Furthermore, the base network apparatus 600 may include a processor 605, a memory 610, an input device 615, an output device 620, and a transceiver 625.

In some embodiments, the input device 615 and the output device 620 are combined into a single device, such as a touchscreen. In certain embodiments, the network apparatus 600 may not include any input device 615 and/or output device 620. In various embodiments, the network apparatus 600 may include one or more of: the processor 605, the memory 610, and the transceiver 625, and may not include the input device 615 and/or the output device 620.

As depicted, the transceiver 625 includes at least one transmitter 630 and at least one receiver 635. Here, the transceiver 625 communicates with one or more remote units 105. Additionally, the transceiver 625 may support at least one network interface 640 and/or application interface 645. The application interface(s) 645 may support one or more APIs. The network interface(s) 640 may support 3GPP reference points, such as Uu, N1, N2 and N3. Other network interfaces 640 may be supported, as understood by one of ordinary skill in the art.

The processor 605, in one embodiment, may include any known controller capable of executing computer-readable instructions and/or capable of performing logical operations. For example, the processor 605 may be a microcontroller, a microprocessor, a CPU, a GPU, an auxiliary processing unit, a FPGA, or similar programmable controller. In some embodiments, the processor 605 executes instructions stored in the memory 610 to perform the methods and routines described herein. The processor 605 is communicatively coupled to the memory 610, the input device 615, the output device 620, and the transceiver 625. In certain embodiments, the processor 805 may include an application processor (also known as "main processor") which manages application-domain and operating system ("OS") functions and a baseband processor (also known as "baseband radio processor") which manages radio function.

In various embodiments, the network apparatus 600 is a RAN node (e.g., gNB) that facilitates power efficient PDCCH monitoring, as described herein. In such embodiments, the processor 605 determines, at a mobile wireless network, downlink control information ("DCI") having a first DCI format that indicates to a user equipment ("UE") to skip monitoring a second DCI format on a set of physical downlink control channel ("PDCCH") monitoring occasions of a plurality of PDCCH monitoring occasions for the second DCI format associated with a second search space configuration. In one embodiment, the transceiver 625 sends, from the mobile wireless network to the UE, the DCI having the first DCI format according to a first search space configuration of a first cell.

In one embodiment, the processor 605 configures the UE with a plurality of values for one or more search space configuration parameters for the second search space configuration. In further embodiments, the transceiver 625 sends an indication of which search space configuration parameter values to apply to determine the corresponding plurality of PDCCH monitoring occasions. In one embodiment, the transceiver 625 sends a plurality of search space configurations to the UE where each of the plurality of search space configurations comprises information of a search space priority.

The memory 610, in one embodiment, is a computer readable storage medium. In some embodiments, the memory 610 includes volatile computer storage media. For example, the memory 610 may include a RAM, including dynamic RAM ("DRAM"), synchronous dynamic RAM ("SDRAM"), and/or static RAM ("SRAM"). In some embodiments, the memory 610 includes non-volatile computer storage media. For example, the memory 610 may include a hard disk drive, a flash memory, or any other suitable non-volatile computer storage device. In some embodiments, the memory 610 includes both volatile and non-volatile computer storage media.

In some embodiments, the memory 610 stores data related to power efficient PDCCH monitoring. For example, the memory 610 may store parameters, configurations, resource assignments, policies, and the like, as described above. In certain embodiments, the memory 610 also stores program code and related data, such as an operating system or other controller algorithms operating on the network apparatus 600.

The input device 615, in one embodiment, may include any known computer input device including a touch panel, a button, a keyboard, a stylus, a microphone, or the like. In some embodiments, the input device 615 may be integrated with the output device 620, for example, as a touchscreen or similar touch-sensitive display. In some embodiments, the input device 615 includes a touchscreen such that text may be input using a virtual keyboard displayed on the touchscreen and/or by handwriting on the touchscreen. In some embodiments, the input device 615 includes two or more different devices, such as a keyboard and a touch panel.

The output device 620, in one embodiment, is designed to output visual, audible, and/or haptic signals. In some embodiments, the output device 620 includes an electronically controllable display or display device capable of outputting visual data to a user. For example, the output device 620 may include, but is not limited to, an LCD display, an LED display, an OLED display, a projector, or similar display device capable of outputting images, text, or the like to a user. As another, non-limiting, example, the output device 620 may include a wearable display separate from, but communicatively coupled to, the rest of the network apparatus 600, such as a smart watch, smart glasses, a heads-up display, or the like. Further, the output device 620 may be a component of a smart phone, a personal digital assistant, a television, a table computer, a notebook (laptop) computer, a personal computer, a vehicle dashboard, or the like.

In certain embodiments, the output device 620 includes one or more speakers for producing sound. For example, the output device 620 may produce an audible alert or notification (e.g., a beep or chime). In some embodiments, the output device 620 includes one or more haptic devices for producing vibrations, motion, or other haptic feedback. In some embodiments, all, or portions of the output device 620 may be integrated with the input device 615. For example, the input device 615 and output device 620 may form a touchscreen or similar touch-sensitive display. In other embodiments, the output device 620 may be located near the input device 615.

The transceiver 625 includes at least transmitter 630 and at least one receiver 635. One or more transmitters 630 may be used to communicate with the UE, as described herein. Similarly, one or more receivers 635 may be used to communicate with network functions in the NPN, PLMN and/or RAN, as described herein. Although only one transmitter 630 and one receiver 635 are illustrated, the network apparatus 600 may have any suitable number of transmitters 630 and receivers 635. Further, the transmitter(s) 630 and the receiver(s) 635 may be any suitable type of transmitters and receivers.

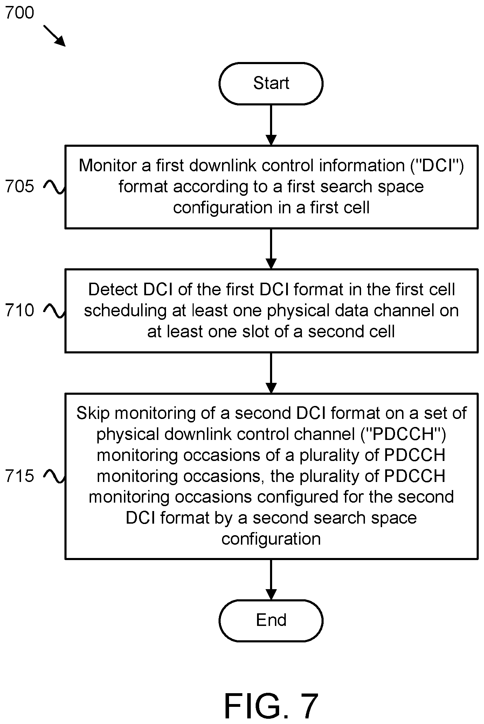

Figure 7 is a flowchart diagram of a method 700 for power efficient PDCCH monitoring. The method 700 may be performed by a UE as described herein, for example, the remote unit 105, the UE 205 and/or the user equipment apparatus 500. In some embodiments, the method 700 may be performed by a processor executing program code, for example, a microcontroller, a microprocessor, a CPU, a GPU, an auxiliary processing unit, a FPGA, or the like.

In one embodiment, the method 700 begins and monitors 705 a first downlink control information ("DCI") format according to a first search space configuration in a first cell. In further embodiments, the method 700 detects 710 DCI of the first DCI format in the first cell scheduling at least one physical data channel on at least one slot of a second cell. In some embodiments, the method 700 skips 715 monitoring of a second DCI format on a set of physical downlink control channel ("PDCCH") monitoring occasions of a plurality of PDCCH monitoring occasions, the plurality of PDCCH monitoring occasions configured for the second DCI format by a second search space configuration, and the method 700 ends.

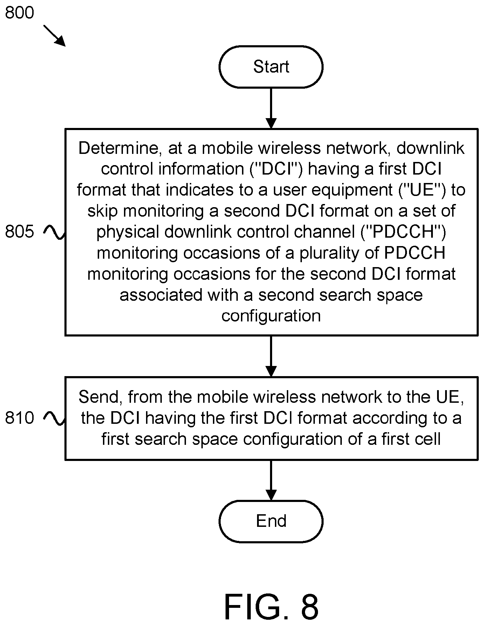

Figure 8 is a flowchart diagram of a method 800 for power efficient PDCCH monitoring. The method 800 may be performed by a network device as described herein, for example, the base unit 121, the RAN node 210, gNB, and/or the network equipment apparatus 600. In some embodiments, the method 800 may be performed by a processor executing program code, for example, a microcontroller, a microprocessor, a CPU, a GPU, an auxiliary processing unit, a FPGA, or the like.

In one embodiment, the method 800 begins and determines 805, at a mobile wireless network, downlink control information ("DCI") having a first DCI format that indicates to a user equipment ("UE") to skip monitoring a second DCI format on a set of physical downlink control channel ("PDCCH") monitoring occasions of a plurality of PDCCH monitoring occasions for the second DCI format associated with a second search space configuration. In further embodiments, the method 800 sends 810, from the mobile wireless network to the UE, the DCI having the first DCI format according to a first search space configuration of a first cell, and the method 800 ends.

A first method is disclosed for power efficient PDCCH monitoring. In one embodiment, the first method includes monitoring a first downlink control information ("DCI") format according to a first search space configuration in a first cell, detecting DCI of the first DCI format in the first cell scheduling at least one physical data channel on at least one slot of a second cell, and skipping monitoring of a second DCI format on a set of physical downlink control channel ("PDCCH") monitoring occasions of a plurality of PDCCH monitoring occasions, the plurality of PDCCH monitoring occasions configured for the second DCI format by a second search space configuration.

In one embodiment, the first method includes determining the set of PDCCH monitoring occasions based on the detected DCI. In some embodiments, the set of PDCCH monitoring occasions is determined based on scheduling information in the detected DCI. The scheduling information may include information of the at least one physical data channel and information of a minimum scheduling offset value for the at least one physical data channel.

In one embodiment, skipping monitoring the second DCI format comprises not performing blind decoding of a plurality of PDCCH candidates for the second DCI format. In some embodiments, the first cell is a scheduling cell, and the second cell is a scheduled cell. In certain embodiments, the set of PDCCH monitoring occasions to skip monitoring the second DCI format comprises a set of consecutive PDCCH monitoring occasions for the second DCI format.

In one embodiment, the first DCI format is a same format as the second DCI format. In some embodiments, the first method includes ceasing monitoring a plurality of DCI formats configured by the second search space configuration in response to detecting the DCI of the first DCI format and resuming monitoring the plurality of DCI formats configured by the second search space configuration in response to detecting DCI of a third DCI format.

In one embodiment, the first method includes receiving an association indication of the first search space configuration with the second search space configuration. In some embodiments, the first search space configuration and the second search space configuration are associated with a group of search space sets. In various embodiments, a UE is configured with a plurality of values for search space configuration parameters for at least one of the first search space configuration and the second search space configuration.

In one embodiment, the first method includes receiving an indication of which search space configuration parameter values to apply to determine the corresponding plurality of PDCCH monitoring occasions. In some embodiments, the first method includes receiving a plurality of search space configurations where each of the plurality of search space configurations comprises information of a search space priority and determining a plurality of PDCCH candidates to monitor and an associated plurality of non-overlapped control channel elements ("CCEs") based on the search space priorities for the plurality of search space configurations.

A first apparatus is disclosed for power efficient PDCCH monitoring. The first apparatus, in one embodiment, includes a processor that monitors a first downlink control information ("DCI") format according to a first search space configuration in a first cell, detects DCI of the first DCI format in the first cell scheduling at least one physical data channel on at least one slot of a second cell, and skips monitoring of a second DCI format on a set of physical downlink control channel ("PDCCH") monitoring occasions of a plurality of PDCCH monitoring occasions, the plurality of PDCCH monitoring occasions configured for the second DCI format by a second search space configuration.

In one embodiment, the processor determines the set of PDCCH monitoring occasions based on the detected DCI. In some embodiments, the set of PDCCH monitoring occasions is determined based on scheduling information in the detected DCI. The scheduling information may include information of the at least one physical data channel and information of a minimum scheduling offset value for the at least one physical data channel.

In one embodiment, skipping monitoring the second DCI format comprises not performing blind decoding of a plurality of PDCCH candidates for the second DCI format. In certain embodiments, the first cell is a scheduling cell, and the second cell is a scheduled cell. In further embodiments, the set of PDCCH monitoring occasions to skip monitoring the second DCI format comprises a set of consecutive PDCCH monitoring occasions for the second DCI format.

In one embodiment, the first DCI format is a same format as the second DCI format. In some embodiments, the processor ceases monitoring a plurality of DCI formats configured by the second search space configuration in response to detecting the DCI of the first DCI format and resumes monitoring the plurality of DCI formats configured by the second search space configuration in response to detecting DCI of a third DCI format.

In one embodiment, the first apparatus includes a transceiver that receives an association indication of the first search space configuration with the second search space configuration. In certain embodiments, the first search space configuration and the second search space configuration are associated with a group of search space sets. In certain embodiments, the first apparatus is configured with a plurality of values for search space configuration parameters for at least one of the first search space configuration and the second search space configuration.

In one embodiment, the first apparatus includes a transceiver that receives an indication of which search space configuration parameter values to apply to determine the corresponding plurality of PDCCH monitoring occasions. In some embodiments, the first apparatus includes a transceiver that receives a plurality of search space configurations where each of the plurality of search space configurations comprises information of a search space priority. The processor may determine a plurality of PDCCH candidates to monitor and an associated plurality of non-overlapped control channel elements ("CCEs") based on the search space priorities for the plurality of search space configurations.

A second method is disclosed for power efficient PDCCH monitoring. In one embodiment, the second method includes determining, at a mobile wireless network, downlink control information ("DCI") having a first DCI format that indicates to a user equipment ("UE") to skip monitoring a second DCI format on a set of physical downlink control channel ("PDCCH") monitoring occasions of a plurality of PDCCH monitoring occasions for the second DCI format associated with a second search space configuration and sending, from the mobile wireless network to the UE, the DCI having the first DCI format according to a first search space configuration of a first cell.

In one embodiment, the second method includes configuring the UE with a plurality of values for one or more search space configuration parameters for the second search space configuration. In certain embodiments, the second method includes sending an indication of which search space configuration parameter values to apply to determine the corresponding plurality of PDCCH monitoring occasions.

In various embodiments, the second method includes sending a plurality of search space configurations to the UE where each of the plurality of search space configurations comprises information of a search space priority. A plurality of PDCCH candidates to monitor and an associated plurality of non-overlapped control channel elements ("CCEs") may be determined based on the search space priorities for the plurality of search space configurations. In one embodiment, the DCI having the first DCI format schedules at least one physical data channel on at least one slot of a second cell.

A second apparatus is disclosed for power efficient PDCCH monitoring. In one embodiment, the second apparatus includes a processor that determines, at a mobile wireless network, downlink control information ("DCI") having a first DCI format that indicates to a user equipment ("UE") to skip monitoring a second DCI format on a set of physical downlink control channel ("PDCCH") monitoring occasions of a plurality of PDCCH monitoring occasions for the second DCI format associated with a second search space configuration and a transceiver that sends, from the mobile wireless network to the UE, the DCI having the first DCI format according to a first search space configuration of a first cell.

In one embodiment, the processor configures the UE with a plurality of values for one or more search space configuration parameters for the second search space configuration. In further embodiments, the transceiver sends an indication of which search space configuration parameter values to apply to determine the corresponding plurality of PDCCH monitoring occasions.

In one embodiment, the transceiver sends a plurality of search space configurations to the UE where each of the plurality of search space configurations comprises information of a search space priority. A plurality of PDCCH candidates to monitor and an associated plurality of non-overlapped control channel elements ("CCEs") may be determined based on the search space priorities for the plurality of search space configurations. In one embodiment, the DCI having the first DCI format schedules at least one physical data channel on at least one slot of a second cell.

Embodiments may be practiced in other specific forms. The described embodiments are to be considered in all respects only as illustrative and not restrictive. The scope of the invention is, therefore, indicated by the appended claims rather than by the foregoing description.

**Claims**

1. A method (700) performed by a user equipment (500), the method comprising:

   monitoring (705) a first downlink control information, DCI, format according to a first search space configuration in a first cell;
   detecting (710) DCI of the first DCI format in the first cell scheduling at least one physical data channel on at least one slot of a second cell; and
   skipping (715) monitoring of a second DCI format on a set of physical downlink control channel, PDCCH, monitoring occasions of a plurality of PDCCH monitoring occasions, the plurality of PDCCH monitoring occasions configured for the second DCI format by a second search space configuration,
   wherein the method further comprises determining the set of PDCCH monitoring occasions based on the detected DCI,
   wherein the set of PDCCH monitoring occasions is determined based on scheduling information in the detected DCI, and
   wherein the scheduling information comprises information of the at least one physical data channel and information of a minimum scheduling offset value for the at least one physical data channel.

2. The method (700) of claim 1, wherein skipping monitoring the second DCI format comprises not performing blind decoding of a plurality of PDCCH candidates for the second DCI format.

3. The method (700) of claim 1, wherein the first cell is a scheduling cell, and the second cell is a scheduled cell.

4. The method (700) of claim 1, wherein:

   the set of PDCCH monitoring occasions to skip monitoring the second DCI format comprises a set of consecutive PDCCH monitoring occasions for the second DCI format; or
   the first DCI format is a same format as the second DCI format.

5. The method (700) of claim 1, further comprising:

   ceasing monitoring a plurality of DCI formats configured by the second search space configuration in response to detecting the DCI of the first DCI format; and
   resuming monitoring the plurality of DCI formats configured by the second search space configuration in response to detecting DCI of a third DCI format.

6. The method (700) of claim 1, further comprising receiving an association indication of the first search space configuration with the second search space configuration, wherein the first search space configuration and the second search space configuration are associated with a group of search space sets.

7. The method (700) of claim 1, wherein the user equipment is configured with a plurality of values for search space configuration parameters for at least one of the first search space configuration and the second search space configuration, optionally further comprising receiving an indication of which search space configuration parameter values to apply to determine the corresponding plurality of PDCCH monitoring occasions.

8. The method (700) of claim 1, further comprising:

   receiving a plurality of search space configurations where each of the plurality of search space configurations comprises information of a search space priority; and
   determining a plurality of PDCCH candidates to monitor and an associated plurality of non-overlapped control channel elements, CCEs, based on the search space priorities for the plurality of search space configurations.

9. A user equipment(500), comprising:

   a processor (505) that is configured to:

monitor (705) a first downlink control information, DCI, format according to a first search space configuration in a first cell;

detect (710) DCI of the first DCI format in the first cell scheduling at least one physical data channel on at least one slot of a second cell; and

skip (715) monitoring of a second DCI format on a set of physical downlink control channel, PDCCH, monitoring occasions of a plurality of PDCCH monitoring occasions, the plurality of PDCCH monitoring occasions configured for the second DCI format by a second search space configuration,

wherein processor (505) is configured to determine the set of PDCCH monitoring occasions based on the detected DCI,

wherein the set of PDCCH monitoring occasions is determined based on scheduling information in the detected DCI, and

wherein the scheduling information comprises information of the at least one physical data channel and information of a minimum scheduling offset value for the at least one physical data channel.

10. The user equipment (500) of claim 9, wherein the processor is configured to determine the set of PDCCH monitoring occasions based on the detected DCI.

11. The user equipment (500) of claim 9, wherein the set of PDCCH monitoring occasions to skip monitoring the second DCI format comprises a set of consecutive PDCCH monitoring occasions for the second DCI format.

12. The user equipment (500) of claim 9, wherein the processor is configured to:

cease monitoring a plurality of DCI formats configured by the second search space configuration in response to detecting the DCI of the first DCI format; and
resume monitoring the plurality of DCI formats configured by the second search space configuration in response to detecting DCI of a third DCI format.

13. The user equipment (500) of claim 9, further comprising a transceiver that is configured to:

receive an association indication of the first search space configuration with the second search space configuration, wherein the first search space configuration and the second search space configuration are associated with a group of search space sets; or
receive a plurality of search space configurations where each of the plurality of search space configurations comprises information of a search space priority, wherein the processor determines a plurality of PDCCH candidates to monitor and an associated plurality of non-overlapped control channel elements, CCEs, based on the search space priorities for the plurality of search space configurations.

14. A method (800) performed by a network device (600) of a mobile wireless network, the method comprising:

determining (805) downlink control information, DCI, having a first DCI format that indicates to a user equipment, UE, to skip monitoring a second DCI format on a set of physical downlink control channel, PDCCH, monitoring occasions of a plurality of PDCCH monitoring occasions for the second DCI format associated with a second search space configuration; and
sending (810), to the UE, the DCI having the first DCI format according to a first search space configuration of a first cell, wherein the DCI schedules at least one physical data channel on at least one slot of a second cell, wherein the DCI comprises scheduling information that is used by the network device (600) to indicate to the UE to skip monitoring the second DCI format, and wherein the scheduling information comprises information of the at least one physical data channel and information of a minimum scheduling offset value for the at least one physical data channel.

15. A network device (600) of a mobile wireless network, comprising:

a processor (605) that is configured to determine (805) downlink control information, DCI, having a first DCI format that indicates to a user equipment, UE, to skip monitoring a second DCI format on a set of physical downlink control channel, PDCCH, monitoring occasions of a plurality of PDCCH monitoring occasions for the second DCI format associated with a second search space configuration; and
a transceiver (625) that is configured to send (810), to the UE, the DCI having the first DCI format according to a first search space configuration of a first cell,
wherein the DCI schedules at least one physical data channel on at least one slot of a second cell, wherein the DCI comprises scheduling information that is used by the network device (600) to indicate to the UE to skip monitoring the second DCI format, and wherein the scheduling information comprises information of the at least one physical data channel and information of a minimum scheduling offset value for the at least one physical data channel.

**Patentansprüche**

1.  Verfahren (700), das durch eine Benutzereinrichtung (500) durchgeführt wird, das Verfahren umfassend:

    Überwachen (705) eines ersten Downlink-Steuerinformationsformats, DCI-Formats, gemäß einer ersten Suchraumkonfiguration in einer ersten Zelle;
    Erkennen (710) von DCI des ersten DCI-Formats in der ersten Zelle, die mindestens einen physikalischen Datenkanal auf mindestens einem Slot einer zweiten Zelle planen; und
    Überspringen (715) des Überwachens eines zweiten DCI-Formats auf einem Satz von Überwachungsgelegenheiten eines physikalischen Downlink-Steuerkanals, PDCCH-Überwachungsgelegenheiten, einer Vielzahl von PDCCH-Überwachungsgelegenheiten, wobei die Vielzahl von PDCCH-Überwachungsgelegenheiten durch eine zweite Suchraumkonfiguration für das zweite DCI-Format konfiguriert ist,
    wobei das Verfahren ferner ein Bestimmen des Satzes von PDCCH-Überwachungsgelegenheiten basierend auf den erkannten DCI umfasst,
    wobei der Satz von PDCCH-Überwachungsgelegenheiten basierend auf Planungsinformationen in den erkannten DCI bestimmt wird, und
    wobei die Planungsinformationen Informationen zu dem mindestens einen physikalischen Datenkanal und Informationen zu einem minimalen Planungsversatzwert für den mindestens einen physikalischen Datenkanal umfassen.

2.  Verfahren (700) nach Anspruch 1, wobei das Überspringen des Überwachens des zweiten DCI-Formats ein Nichtdurchführen einer Blinddecodierung einer Vielzahl von PDCCH-Kandidaten für das zweite DCI-Format umfasst.

3.  Verfahren (700) nach Anspruch 1, wobei die erste Zelle eine Planungszelle ist und die zweite Zelle eine geplante Zelle ist.

4.  Verfahren (700) nach Anspruch 1, wobei:

    der Satz von PDCCH-Überwachungsgelegenheiten, um das Überwachen des zweiten DCI-Formats zu überspringen, einen Satz von aufeinanderfolgenden PDCCH-Überwachungsgelegenheiten für das zweite DCI-Format umfasst; oder
    das erste DCI-Format ein selbes Format wie das zweite DCI-Format ist.

5.  Verfahren (700) nach Anspruch 1, ferner umfassend:

    Beenden des Überwachens einer Vielzahl von DCI-Formaten, die durch die zweite Suchraumkonfiguration konfiguriert wurden, als Reaktion auf das Erkennen der DCI des ersten DCI-Formats; und
    Wiederaufnehmen des Überwachens der Vielzahl von DCI-Formaten, die durch die zweite Suchraumkonfiguration konfiguriert werden, als Reaktion auf das Erkennen von DCI eines dritten DCI-Formats.

6.  Verfahren (700) nach Anspruch 1, ferner umfassend ein Empfangen einer Zuordnungsanzeige der ersten Suchraumkonfiguration zu der zweiten Suchraumkonfiguration, wobei die erste Suchraumkonfiguration und die zweite Suchraumkonfiguration einer Gruppe von Suchraumsätzen zugeordnet sind.

7.  Verfahren (700) nach Anspruch 1, wobei die Benutzereinrichtung mit einer Vielzahl von Werten für Suchraumkonfigurationsparameter für mindestens eine der ersten Suchraumkonfiguration und der zweiten Suchraumkonfiguration konfiguriert ist, optional ferner umfassend das Empfangen einer Anzeige, welche Suchraumkonfigurationsparameterwerte anzuwenden sind, um die entsprechende Vielzahl von PDCCH-Überwachungsgelegenheiten zu bestimmen.

8.  Verfahren (700) nach Anspruch 1, ferner umfassend:

EP 4 169 199 B1

Empfangen einer Vielzahl von Suchraumkonfigurationen, wobei jede der Vielzahl von Suchraumkonfigurationen Informationen zu einer Suchraumpriorität umfasst; und

Bestimmen einer Vielzahl von zu überwachenden PDCCH-Kandidaten und einer zugeordneten Vielzahl von nicht überlappenden Steuerkanalelementen, CCEs, basierend auf den Suchraumprioritäten für die Vielzahl von Suchraumkonfigurationen.

9. Benutzereinrichtung (500), umfassend:
einen Prozessor (505), der konfiguriert ist zum:

Überwachen (705) eines ersten Downlink-Steuerinformationsformats, DCI-Formats, gemäß einer ersten Suchraumkonfiguration in einer ersten Zelle;
Erkennen (710) von DCI des ersten DCI-Formats in der ersten Zelle, die mindestens einen physikalischen Datenkanal auf mindestens einem Slot einer zweiten Zelle planen; und
Überspringen (715) des Überwachens eines zweiten DCI-Formats auf einem Satz von Überwachungsgelegenheiten des physikalischen Downlink-Steuerkanals, PDCCH-Überwachungsgelegenheiten, einer Vielzahl von PDCCH-Überwachungsgelegenheiten, wobei die Vielzahl von PDCCH-Überwachungsgelegenheiten durch eine zweite Suchraumkonfiguration für das zweite DCI-Format konfiguriert ist,
wobei der Prozessor (505) konfiguriert ist, um den Satz von PDCCH-Überwachungsgelegenheiten basierend auf den erkannten DCI zu bestimmen,
wobei der Satz von PDCCH-Überwachungsgelegenheiten basierend auf Planungsinformationen in den erkannten DCI bestimmt wird, und
wobei die Planungsinformationen Informationen zu dem mindestens einen physikalischen Datenkanal und Informationen zu einem minimalen Planungsversatzwert für den mindestens einen physikalischen Datenkanal umfassen.

10. Benutzereinrichtung (500) nach Anspruch 9, wobei der Prozessor konfiguriert ist, um den Satz von PDCCH-Überwachungsgelegenheiten basierend auf den erkannten DCI zu bestimmen.

11. Benutzereinrichtung (500) nach Anspruch 9, wobei der Satz von PDCCH-Überwachungsgelegenheiten, um das Überwachen des zweiten DCI-Formats zu überspringen, einen Satz von aufeinanderfolgenden PDCCH-Überwachungsgelegenheiten für das zweite DCI-Format umfasst.

12. Benutzereinrichtung (500) nach Anspruch 9, wobei der Prozessor konfiguriert ist zum:

Beenden des Überwachens einer Vielzahl von DCI-Formaten, die durch die zweite Suchraumkonfiguration konfiguriert werden, als Reaktion auf das Erkennen der DCI des ersten DCI-Formats; und
Wiederaufnehmen des Überwachens der Vielzahl von DCI-Formaten, die durch die zweite Suchraumkonfiguration konfiguriert werden, als Reaktion auf das Erkennen von DCI eines dritten DCI-Formats.

13. Benutzereinrichtung (500) nach Anspruch 9, ferner umfassend einen Sendeempfänger, der konfiguriert ist zum:

Empfangen einer Zuordnungsanzeige der ersten Suchraumkonfiguration zu der zweiten Suchraumkonfiguration, wobei die erste Suchraumkonfiguration und die zweite Suchraumkonfiguration einer Gruppe von Suchraumsätzen zugeordnet sind; oder
Empfangen einer Vielzahl von Suchraumkonfigurationen, wobei jede der Vielzahl von Suchraumkonfigurationen Informationen zu einer Suchraumpriorität umfasst, wobei der Prozessor basierend auf den Suchraumprioritäten für die Vielzahl von Suchraumkonfigurationen eine Vielzahl von zu überwachenden PDCCH-Kandidaten und eine zugeordnete Vielzahl von nicht überlappenden Steuerkanalelementen, CCEs, bestimmt.

14. Verfahren (800), das durch eine Netzwerkvorrichtung (600) eines mobilen drahtlosen Netzwerks durchgeführt wird, das Verfahren umfassend:

Bestimmen (805) von Downlink-Steuerinformationen, DCI, die ein erstes DCI-Format aufweisen, das einer Benutzereinrichtung, UE, anzeigt, das Überwachen eines zweiten DCI-Formats auf einem Satz von Überwachungsgelegenheiten des physikalischen Downlink-Steuerkanals, PDCCH-Überwachungsgelegenheiten, einer Vielzahl von PDCCH-Überwachungsgelegenheiten für das zweite DCI-Format zu überspringen, die einer zweiten Suchraumkonfiguration zugeordnet sind; und
Senden (810), an die UE, der DC, die das erste DCI-Format aufweisen, gemäß einer ersten Suchraumkonfiguration einer ersten Zelle, wobei die DCI mindestens einen physikalischen Datenkanal auf mindestens einem Slot einer zweiten Zelle plant, wobei die DCI Planungsinformationen umfasst, die durch die Netzwerkvorrichtung (600) verwendet werden, um der UE anzuzeigen, das Überwachen des zweiten DCI-Formats zu überspringen, und wobei die Planungsinformationen Informationen zu dem mindestens einen physikalischen Datenkanal und Informationen zu einem minimalen Planungsversatzwert für den mindestens einen physikalischen Datenkanal umfassen.

15. Netzwerkvorrichtung (600) eines mobilen drahtlosen Netzwerks, umfassend:

einen Prozessor (605), der konfiguriert ist, um Downlink-Steuerinformationen, DCI, die ein erstes DCI-Format aufweisen, zu bestimmen (805), die einer Benutzereinrichtung, UE, anzeigen, das Überwachen eines zweiten DCI-Formats auf einem Satz von Überwachungsgelegenheiten des physikalischen Downlink-Steuerkanals, PDCCH-Überwachungsgelegenheiten, einer Vielzahl von PDCCH-Überwachungsgelegenheiten für das zweite DCI-Format zu überspringen, die einer zweiten Suchraumkonfiguration zugeordnet sind; und
einen Sendeempfänger (625), der konfiguriert ist, um, an die UE, die DCI, die das erste DCI-Format aufweisen, gemäß einer ersten Suchraumkonfiguration einer ersten Zelle zu senden (810),
wobei die DCI mindestens einen physikalischen Datenkanal auf mindestens einem Slot einer zweiten Zelle planen, wobei die DCI Planungsinformationen umfassen, die durch die Netzwerkvorrichtung (600) verwendet werden, um der UE anzuzeigen, das Überwachen des zweiten DCI-Formats zu überspringen, und wobei die Planungsinformationen Informationen zu dem mindestens einen physikalischen Datenkanal und Informationen zu einem minimalen Planungsversatzwert für den mindestens einen physikalischen Datenkanal umfassen.

## Revendications

1. Procédé (700) effectué par un équipement utilisateur (500), le procédé comprenant :

la surveillance (705) d'un premier format d'information de commande sur la liaison descendante, DCI, conformément à une première configuration de l'espace de recherche dans une première cellule ;
la détection (710) de la DCI du premier format de DCI dans la première cellule programmant au moins un canal de données physiques sur au moins un créneau d'une seconde cellule ; et
l'omission (715) de la surveillance d'un deuxième format de DCI sur un ensemble d'occasions de surveillance du canal de commande de la liaison descendante physique, PDCCH, d'une pluralité d'occasions de surveillance PDCCH, la pluralité d'occasions de surveillance PDCCH configurées pour le deuxième format de DCI par une seconde configuration de l'espace de recherche,
dans lequel le procédé consiste en outre à déterminer l'ensemble des occasions de surveillance PDCCH sur la base de la DCI détecté,
dans lequel l'ensemble des occasions de surveillance PDCCH est déterminé sur la base des informations de programmation contenues dans la DCI détecté, et
dans lequel les informations de programmation comprennent des informations sur l'au moins un canal de données physiques et des informations sur une valeur minimale de décalage de programmation minimale pour l'au moins un canal de données physiques.

2. Procédé (700) selon la revendication 1, dans lequel le fait d'omettre la surveillance du deuxième format de DCI consiste à ne pas effectuer de décodage aveugle d'une pluralité de candidats PDCCH pour le deuxième format de DCI.

3. Procédé (700) selon la revendication 1, dans lequel la première cellule est une cellule de programmation et la seconde cellule est une cellule programmée.

4. Procédé (700) selon la revendication 1, dans lequel :

l'ensemble d'occasions de surveillance PDCCH permettant d'omettre la surveillance du deuxième format de DCI comprend un ensemble d'occasions de surveillance PDCCH consécutives pour le deuxième format de DCI ; ou
le premier format de DCI est un format identique au deuxième format de DCI.

5. Procédé (700) selon la revendication 1, comprenant en outre :

la cessation de la surveillance d'une pluralité de formats de DCI configurés par la seconde configuration de l'espace de recherche en réponse à la détection de la DCI du premier format de DCI ; et

la reprise de la surveillance de la pluralité de formats de DCI configurés par la seconde configuration de l'espace de recherche en réponse à la détection d'un DCI d'un troisième format de DCI.

6. Procédé (700) selon la revendication 1, comprenant en outre la réception d'une indication d'association de la première configuration de l'espace de recherche avec la seconde configuration de l'espace de recherche, dans laquelle la première configuration de l'espace de recherche et la seconde configuration de l'espace de recherche sont associées à un groupe d'ensembles d'espaces de recherche.

7. Procédé (700) selon la revendication 1, dans lequel l'équipement utilisateur est configuré avec une pluralité de valeurs pour les paramètres de configuration de l'espace de recherche pour au moins une de la première configuration de l'espace de recherche et de la seconde configuration de l'espace de recherche, comprenant éventuellement en outre la réception d'une indication des valeurs des paramètres de configuration de l'espace de recherche à appliquer pour déterminer la pluralité correspondante d'occasions de surveillance PDCCH.

8. Procédé (700) selon la revendication 1, comprenant en outre :

la réception d'une pluralité de configurations de l'espace de recherche, où chacune de la pluralité de l'espace de recherche comprennent des informations sur la priorité de l'espace de recherche ; et

la détermination d'une pluralité de candidats PDCCH à surveiller et une pluralité associée d'éléments de canal de commande non superposés, CCE, sur la base des priorités de l'espace de recherche pour la pluralité de configurations de l'espace de recherche.

9. Équipement utilisateur (500), comprenant :
un processeur (505) qui est configuré pour :

surveiller (705) un premier format d'information de commande sur la liaison descendante, DCI, conformément à une première configuration de l'espace de recherche dans une première cellule ;

la détection (710) de la DCI du premier format de DCI dans la première cellule programmant au moins un canal de données physiques sur au moins un créneau d'une seconde cellule ; et

l'omission (715) de la surveillance d'un deuxième format de DCI sur un ensemble d'occasions de surveillance du canal de commande de la liaison descendante physique, PDCCH, d'une pluralité d'occasions de surveillance PDCCH, la pluralité d'occasions de surveillance PDCCH configurées pour le deuxième format de DCI par une seconde configuration de l'espace de recherche,

dans lequel le processeur (505) est configuré pour déterminer l'ensemble des occasions de surveillance PDCCH sur la base de la DCI détecté,

dans lequel l'ensemble des occasions de surveillance PDCCH est déterminé sur la base des informations de programmation contenues dans la DCI détecté, et

dans lequel les informations de programmation comprennent des informations sur l'au moins un canal de données physiques et des informations sur une valeur minimale de décalage de programmation minimale pour l'au moins un canal de données physiques.

10. Équipement utilisateur (500) selon la revendication 9, dans lequel le processeur est configuré pour déterminer l'ensemble des occasions de surveillance PDCCH sur la base de la DCI détecté.

11. Équipement utilisateur (500) selon la revendication 9, dans lequel l'ensemble d'occasions de surveillance PDCCH pour omettre la surveillance du deuxième format de DCI comprend un ensemble d'occasions de surveillance PDCCH consécutives pour le deuxième format de DCI.

12. Équipement utilisateur (500) selon la revendication 9, dans lequel le processeur est configuré pour :

cesser de surveiller une pluralité de formats de DCI configurés par la seconde configuration de l'espace de recherche en réponse à la détection de la DCI du premier format de DCI ; et

reprendre la surveillance de la pluralité de formats de DCI configurés par la seconde configuration de l'espace de recherche en réponse à la détection de la DCI d'un troisième format de DCI.

13. Équipement utilisateur (500) selon la revendication 9, comprenant en outre un émetteur-récepteur configuré pour :

recevoir une indication d'association de la première configuration de l'espace de recherche avec la seconde configuration de l'espace de recherche, dans lequel la première configuration de l'espace de recherche et la seconde configuration de l'espace de recherche sont associées à un groupe d'ensembles d'espaces de recherche ; ou

recevoir une pluralité de configurations d'espace de recherche où chacune de la pluralité des configurations d'espace de recherche comprend des informations sur une priorité d'espace de recherche, dans lequel le processeur détermine une pluralité de candidats PDCCH à surveiller et une pluralité associée d'éléments de canal de commande non superposés, CCE, sur la base des priorités d'espace de recherche pour la pluralité de configurations d'espace de recherche.

14. Procédé (800) effectué par un dispositif de réseau (600), d'un réseau mobile, le procédé comprenant :

la détermination (805) des informations de commande de liaison descendante, DCI, ayant un premier format de DCI qui indique à un équipement d'utilisateur, UE, d'omettre la surveillance d'un deuxième format de DCI sur un ensemble d'occasions de surveillance du canal de commande de liaison descendante physique, PDCCH, d'une pluralité d'occasions de surveillance PDCCH pour le deuxième format de DCI associé à une seconde configuration de l'espace de recherche ; et

l'envoi (810), à l'UE, de la DCI ayant le premier format de DCI conformément à une première configuration de l'espace de recherche d'une première cellule, dans lequel la DCI programme au moins un canal de données physiques sur au moins un créneau d'une seconde cellule, dans lequel la DCI comprend des informations de programmation utilisées par le dispositif de réseau (600) pour indiquer à l'UE d'omettre la surveillance du deuxième format de DCI, et dans lequel les informations de programmation comprennent des informations sur l'au moins un canal de données physiques et des informations sur une valeur minimale de décalage de programmation pour l'au moins un canal de données physiques.

15. Dispositif de réseau (600) d'un réseau mobile sans fil, comprenant :

un processeur (605) configuré pour déterminer (805) des informations de commande de liaison descendante, DCI, ayant un premier format de DCI qui indique à un équipement utilisateur, UE, d'omettre la surveillance d'un deuxième format de DCI sur un ensemble d'occasions de surveillance du canal de commande de liaison descendante physique, PDCCH, d'une pluralité d'occasions de surveillance PDCCH pour le deuxième format de DCI associé à une seconde configuration de l'espace de recherche ; et

un émetteur-récepteur (625) configuré pour envoyer (810) à l'UE, la DCI ayant le premier format de DCI conformément à une première configuration de l'espace de recherche d'une première cellule,

dans lequel la DCI programme au moins un canal de données physiques sur au moins un créneau d'une seconde cellule, dans lequel la DCI comprend des informations de programmation utilisées par le dispositif de réseau (600) pour indiquer à l'UE d'omettre la surveillance du deuxième format de DCI, et dans lequel les informations de programmation comprennent des informations de l'au moins un canal de données physiques et des informations sur une valeur de décalage de programmation minimale pour l'au moins un canal de données physiques.

FIG. 1

**FIG. 2**

EP 4 169 199 B1

FIG. 3

EP 4 169 199 B1

FIG. 4

EP 4 169 199 B1

User Equipment Apparatus
500

Processor
505

Memory
510

Input Device
515

Output Device
520

Transceiver 525

Transmitter
530

Receiver
535

Network Interface(s)
540

Application Interface(s)
545

FIG. 5

Network Apparatus
600

Processor
605

Memory
610

Input Device
615

Output Device
620

Transceiver 625

Transmitter
630

Receiver
635

Network Interface(s)
640

Application Interface(s)
645

# FIG. 6

700

Start

705 — Monitor a first downlink control information ("DCI") format according to a first search space configuration in a first cell

710 — Detect DCI of the first DCI format in the first cell scheduling at least one physical data channel on at least one slot of a second cell

715 — Skip monitoring of a second DCI format on a set of physical downlink control channel ("PDCCH") monitoring occasions of a plurality of PDCCH monitoring occasions, the plurality of PDCCH monitoring occasions configured for the second DCI format by a second search space configuration

End

FIG. 7

800

Start

805 — Determine, at a mobile wireless network, downlink control information ("DCI") having a first DCI format that indicates to a user equipment ("UE") to skip monitoring a second DCI format on a set of physical downlink control channel ("PDCCH") monitoring occasions of a plurality of PDCCH monitoring occasions for the second DCI format associated with a second search space configuration

810 — Send, from the mobile wireless network to the UE, the DCI having the first DCI format according to a first search space configuration of a first cell

End

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63041755, Hyejung Jung
- WO 2020055212 A1
- US 2020169991 A1

**Non-patent literature cited in the description**

- **SAMSUNG**. On UE adaptation Schemes. *3GPP DRAFT; R1-1902318*